# EUROPEAN PATENT APPLICATION

(11) **EP 4 848 885 A2**
(43) Date of publication of application: **02.12.2026**
(21) Application number: 26190273.8
(22) Date of filing: 30.12.2022
(51) Int. Cl.: H04W 76/23

(54) **COMMUNICATION METHOD AND APPARATUS**

(30) Priority: 27.03.2022 CN 202210309467
(62) Document number(s) of the earlier application(s) in accordance with Art. 76 EPC: 22934983.2 / 4 492 756
(71) Applicant: Huawei Technologies Co., Ltd., Shenzhen, Guangdong 518129 (CN)
(72) Inventor: YUAN, Liping, Shenzhen, 518129 (CN); LI, Guanglei, Shenzhen, 518129 (CN)
(74) Representative: Gill Jennings & Every LLP

(57) **Abstract**

Embodiments of this application provide a communication method and apparatus. The method includes: A session management network element receives first information from a first anchor user plane network element anchored by a first session established by a first terminal device, where the first information includes address information of data transmitted between the first terminal device and a second terminal device. The session management network element determines, based on the first information, whether the first terminal device and the second terminal device use a same access network or a same backhaul network. The session management network element determines, when the first terminal device and the second terminal device use the same access network or the same backhaul network, a first network element configured to forward data of the first session. When terminal devices in peer-to-peer communication use a same access network or a same backhaul network based on information reported by an anchor user plane network element anchored by a session, a new network element is determined to provide a forwarding service for data of the session. In this way, a case in which peer-to-peer data transmission can be performed based only on the anchor user plane network element anchored by the session is avoided, and peer-to-peer data transmission performance is improved.

## Description

### TECHNICAL FIELD

This application relates to the communication field, and more specifically, to a communication method and apparatus.

### BACKGROUND

Currently, in a 5th generation (5th generation, 5G) communication system, there are two communication modes for peer-to-peer communication between two terminal devices. In one of the modes, there are peer-to-peer (peer-to-peer, P2P) applications on the terminal devices, and transmission of user plane data is to be directly performed between the terminal devices based on internet protocol (Internet Protocol, IP) addresses of peer ends. In the other mode, two terminal devices belonging to a same 5th generation virtual network (5G Virtual Network, 5G VN) group communicate with each other within the 5G VN group.

In the foregoing two peer-to-peer communication modes, peer-to-peer data transmission is implemented based on a ground anchor user plane network element anchored by a session. However, in some scenarios (for example, in a scenario in which two terminal devices in peer-to-peer communication use a same satellite access network or use a same satellite backhaul link), peer-to-peer data transmission is performed still via the ground anchor user plane network element. Consequently, a data transmission latency may be increased. In this case, how to adjust a network element that provides a forwarding service for data of the session to improve performance of the peer-to-peer communication between the terminal devices becomes an urgent problem to be resolved.

### SUMMARY

Embodiments of this application provide a communication method. A new network element is determined based on information reported by an anchor user plane network element anchored by a session, to provide a forwarding service for data of the session, so that peer-to-peer data transmission performance is improved.

According to a first aspect, a communication method is provided. The method may be performed by a session management network element, or may be performed by a component (for example, a chip or a circuit) of a session management network element. This is not limited herein. For ease of description, the following uses an example in which the method is performed by the session management network element for description.

The method includes: A session management network element receives first information from a first anchor user plane network element. The first anchor user plane network element is a user plane network element anchored by a first session established by a first terminal device, the first information includes a source address of first data and/or a destination address of the first data, and the first data includes data that is of the first session and that is to be sent by the first terminal device to a second terminal device and/or data that is to be sent by the second terminal device to the first terminal device. The session management network element determines, based on the first information, whether the first terminal device and the second terminal device use a same access network or a same backhaul network. The session management network element determines, when the first terminal device and the second terminal device use the same access network or the same backhaul network, a first network element configured to forward the data of the first session.

According to the foregoing technical solution, the session management network element determines, based on information reported by an anchor user plane network element anchored by a session, whether two terminal devices (for example, the first terminal device and the second terminal device) in peer-to-peer communication use a same access network or a same backhaul network. In addition, when the two terminal devices in peer-to-peer communication use the same access network or the same backhaul network, a new network element is determined to provide a forwarding service for data of the session. In this way, a case in which data transmission can be performed based only on the anchor user plane network element anchored by the session is avoided, and peer-to-peer data transmission performance is improved.

With reference to the first aspect, in some implementations of the first aspect, the first information includes an address of the second terminal device. That the session management network element determines, based on the first information, whether the first terminal device and the second terminal device use a same access network or a same backhaul network includes: The session management network element determines location information of the second terminal device based on the address of the second terminal device. The session management network element determines, based on location information of the first terminal device and the location information of the second terminal device, whether the first terminal device and the second terminal device use the same access network or the same backhaul network.

With reference to the first aspect, in some implementations of the first aspect, the first information includes an address of the second terminal device. That the session management network element determines, based on the first information, whether the first terminal device and the second terminal device use a same access network or a same backhaul network includes: The session management network element determines, based on the address of the second terminal device, a second data network access identifier corresponding to a session of the second terminal device. The session management network element determines, based on a first data network access identifier corresponding to the first session and the second data network access identifier, whether the first terminal device and the second terminal device use the same access network or the same backhaul network.

According to the foregoing technical solution, when the first information includes the address of the second terminal device, the session management network element may determine, based on location information of the terminal devices in peer-to-peer communication or data network access identifiers corresponding to sessions of the terminal devices, whether the terminal devices in peer-to-peer communication use the same access network or the same backhaul network. In other words, the session management network element may determine, in different manners, whether the terminal devices in peer-to-peer communication use the same access network or the same backhaul network, to improve flexibility of the solution.

With reference to the first aspect, in some implementations of the first aspect, the access network includes a satellite or a satellite constellation on which an access network device is located; and the backhaul network includes a satellite over a backhaul link, the backhaul link, and a satellite constellation.

For example, when two terminal devices that perform peer-to-peer communication use a same satellite access network a same satellite backhaul link, a session management network element may determine a satellite-borne network element to provide a forwarding service for data of the terminal devices, to reduce a data transmission latency.

With reference to the first aspect, in some implementations of the first aspect, the first network element includes a second anchor user plane network element or an intermediate user plane network element. The second anchor user plane network element is a user plane network element other than the first anchor user plane network element anchored by the first session, and the intermediate user plane network element is configured to provide a forwarding service for communication performed between the first terminal device and the second terminal device via the first session.

According to the foregoing technical solution, the first network element determined by the session management network element may be the anchor user plane network element or the intermediate user plane network element (for example, an enhanced UL CL that is obtained by enhancing a common UL CL and that can provide a forwarding service, a common UL CL, or a local anchor user plane network element), and is not limited to be only the anchor user plane network element. Therefore, flexibility of the solution is improved.

With reference to the first aspect, in some implementations of the first aspect, if the first network element is the intermediate user plane network element, the determining, when the first terminal device and the second terminal device use the same access network or the same backhaul network, a first network element configured to forward the data of the first session includes: When the first terminal device and the second terminal device use the same access network or the same backhaul network, the session management network element determines to insert the first network element or use the inserted first network element.

When the first network element is the intermediate user plane network element, the first network element may be inserted by the session management network element.

With reference to the first aspect, in some implementations of the first aspect, if the first network element is the second anchor user plane network element, the method further includes: The session management network element migrates the first session from being anchored at the first anchor user plane network element to being anchored at the second anchor user plane network element.

When the first network element is the second anchor user plane network element, the first network element may be understood as an anchor user plane network element re-anchored by the first session.

With reference to the first aspect, in some implementations of the first aspect, the first network element is located on a satellite.

According to the foregoing technical solution, the first network element determined by the session management network element may be a satellite-borne first network element, to reduce a data transmission latency when the two terminal devices that perform peer-to-peer communication use the same satellite access network or the same satellite backhaul link.

With reference to the first aspect, in some implementations of the first aspect, the method further includes: The session management network element sends first indication information to the first anchor user plane network element. The first indication information indicates the first anchor user plane network element to report the first information when a first condition is met. The first condition includes receiving data sent by the first terminal device to another terminal device and/or receiving data sent by the another terminal device to the first terminal device.

According to the foregoing technical solution, the first anchor user plane network element may report the first information based on an indication of the session management network element, to know an occasion for reporting the first information.

With reference to the first aspect, in some implementations of the first aspect, before the session management network element sends the first indication information to the first anchor user plane network element, the method further includes: The session management network element determines, based on second information, to send the first indication information to the first anchor user plane network element. The second information includes at least one of the following: information about an access type RAT corresponding to the first session, type information of a backhaul link corresponding to the first session, or the location information of the first terminal device.

According to the foregoing technical solution, the session management network element may determine, based on the second information, that the first indication information needs to be sent, instead of blindly delivering the first indication information. Therefore, accuracy of the solution is improved.

With reference to the first aspect, in some implementations of the first aspect, the method further includes: The session management network element determines the first anchor user plane network element based on fourth information. The fourth information includes at least one of the following: information about an access type RAT corresponding to the first session, type information of a backhaul link corresponding to the first session, the location information of the first terminal device, or indication information indicating that peer-to-peer communication is allowed to be performed on the first session based on the first network element.

With reference to the first aspect, in some implementations of the first aspect, before the session management network element receives the first information from the first anchor user plane network element, the method further includes: The session management network element inserts the first network element based on third information. The third information includes at least one of the following information: the first information, satellite running and control information, the information about the access type RAT corresponding to the first session, the location information of the first terminal device, or the location information of the second terminal device.

According to the foregoing technical solution, the session management network element may pre-insert the first network element based on the third information. There may be a plurality of possibilities for the third information, so that flexibility of the solution is improved.

With reference to the first aspect, in some implementations of the first aspect, the method further includes: The session management network element sends a packet detection rule PDR and a packet forwarding rule FAR to the first network element. The PDR and the FAR indicate the first network element to forward the data of the first session.

According to the foregoing technical solution, the session management network element may enable a data forwarding function of the first network element by configuring the PDR and the FAR for the first network element.

With reference to the first aspect, in some implementations of the first aspect, the method further includes: The session management network element establishes a first forwarding tunnel between the first network element and a second network element. The first forwarding tunnel is used for transmission of data between the first network element and the second network element. The second network element is a network element that forwards data of a second session established by the second terminal device.

According to the foregoing technical solution, the first network element may forward the data of the first session based on the first forwarding tunnel, to implement peer-to-peer communication between the first terminal device and the second terminal device when the first network element that forwards the data of the first session established by the first terminal device is different from the second network element that forwards the data of the second session established by the second terminal device.

With reference to the first aspect, in some implementations of the first aspect, the method further includes: The session management network element establishes a second forwarding tunnel between the first anchor user plane network element and the first network element. The second forwarding tunnel is used for transmission of data between the first anchor user plane network element and the first network element.

According to the foregoing technical solution, the session management network element may further establish a tunnel between the determined first network element and the first anchor user plane network element, to implement peer-to-peer communication between the first terminal device and another terminal device when a session of the another terminal device is anchored at the first anchor user plane network element.

With reference to the first aspect, in some implementations of the first aspect, when a first access network device accessed by the first terminal device switches to a second access network device, the method further includes: The session management network element determines, based on a set of to-be-switched sessions, whether the set of sessions includes the first session. When the set of sessions includes the first session, the session management network element determines, based on the first information, a third network element to forward the data of the first session.

According to the foregoing technical solution, when switching occurs on the access network device accessed by the first terminal device, the session management network element may redetermine, for a migrated session, a network element that provides a data forwarding service.

With reference to the first aspect, in some implementations of the first aspect, the first information further includes at least one of the following information: a source interface identifier of the first data, identification information of a local area network group to which the first terminal device belongs, network instance information used by the first anchor user plane network element to receive the first data, or network instance information used by the first anchor user plane network element to send the first data.

According to a second aspect, a communication method is provided. The method may be performed by a first anchor user plane network element, or may be performed by a component (for example, a chip or a circuit) of a first anchor user plane network element. This is not limited herein. For ease of description, the following uses an example in which the method is performed by the first anchor user plane network element for description.

The method includes: A first anchor user plane network element determines first information. The first anchor user plane network element is an anchor user plane network element anchored by a first session established by a first terminal device. The first anchor user plane network element sends the first information to a session management network element. The first information includes a source address of first data and/or a destination address of the first data. The first data includes data that is of the first session and that is to be sent by the first terminal device to a second terminal device and/or data that is to be sent by the second terminal device to the first terminal device. The first information is used to determine whether the first terminal device and the second terminal device use a same access network or a same backhaul network.

With reference to the second aspect, in some implementations of the second aspect, the method further includes the following steps.

The first anchor user plane network element receives first indication information from the session management network element. The first indication information indicates the first anchor user plane network element to report the first information when a first condition is met.

The first anchor user plane network element determines whether the first condition is met, and the first anchor user plane network element sends the first information to the session management network element when the first condition is met.

The first condition includes receiving data sent by the first terminal device to another terminal device and/or receiving data sent by the another terminal device to the first terminal device.

With reference to the second aspect, in some implementations of the second aspect, the first information further includes at least one of the following information: a source interface identifier of first data, identification information of a local area network group to which the first terminal device belongs, network instance information used by the first anchor user plane network element to receive the first data, network instance information used by the first anchor user plane network element to send the first data, N3 or N9 tunnel information used by the first anchor user plane network element to receive the first data, or N3 or N9 tunnel information used by the first anchor user plane network element to send the first data.

For beneficial effects of the method shown in the second aspect and the possible designs of the second aspect, refer to the beneficial effects in the first aspect and the possible designs of the first aspect.

According to a third aspect, a communication method is provided. The method may be performed by a first network element, or may be performed by a component (for example, a chip or a circuit) of a first network element. This is not limited herein. For ease of description, the following uses an example in which the method is performed by the first network element for description.

The method includes: A first network element receives a packet detection rule PDR and a packet forwarding rule FAR from a session management network element. The first network element forwards data of a first session according to the PDR and the FAR. The first network element is a network element that forwards the data of the first session established by a first terminal device.

With reference to the third aspect, in some implementations of the third aspect, the first network element includes a second anchor user plane network element or an intermediate user plane network element. The second anchor user plane network element is a user plane network element other than a first anchor user plane network element anchored by the first session, and the intermediate user plane network element is configured to provide a forwarding service for communication performed between the first terminal device and a second terminal device via the first session.

With reference to the third aspect, in some implementations of the third aspect, the first network element is located on a satellite.

With reference to the third aspect, in some implementations of the third aspect, that the first network element forwards data of a first session according to the PDR and the FAR includes: The first network element sends, according to the PDR and the FAR, the data of the first session to a second network element through a first forwarding tunnel. The second network element is a network element that forwards data of a second session established by the second terminal device, and the first forwarding tunnel is used for transmission of data between the first network element and the second network element.

With reference to the third aspect, in some implementations of the third aspect, that the first network element forwards data of a first session according to the PDR and the FAR includes: The first network element sends the data of the first session to a third access network device according to the PDR and the FAR. The third access network device is a network device accessed by the second terminal device.

For beneficial effects of the method shown in the third aspect and the possible designs of the third aspect, refer to the beneficial effects in the first aspect and the possible designs of the first aspect.

According to a fourth aspect, a communication apparatus is provided. The apparatus is configured to perform the method according to the first aspect.

The apparatus includes: a receiving unit, configured to receive first information from a first anchor user plane network element, where the first anchor user plane network element is a user plane network element anchored by a first session established by a first terminal device, the first information includes a source address of first data and/or a destination address of the first data, and the first data includes data that is of the first session and that is to be sent by the first terminal device to a second terminal device and/or data that is to be sent by the second terminal device to the first terminal device; and a processing unit, configured to determine, based on the first information, whether the first terminal device and the second terminal device use a same access network or a same backhaul network. When the first terminal device and the second terminal device use the same access network or the same backhaul network, the processing unit is further configured to determine a first network element configured to forward the data of the first session.

With reference to the fourth aspect, in some implementations of the fourth aspect, the first information includes an address of the second terminal device. That the processing unit determines, based on the first information, whether the first terminal device and the second terminal device use a same access network or a same backhaul network includes: The processing unit determines location information of the second terminal device based on the address of the second terminal device. The processing unit determines, based on location information of the first terminal device and the location information of the second terminal device, whether the first terminal device and the second terminal device use the same access network or the same backhaul network.

With reference to the fourth aspect, in some implementations of the fourth aspect, the first information includes an address of the second terminal device. That the processing unit determines, based on the first information, whether the first terminal device and the second terminal device use a same access network or a same backhaul network includes: The processing unit determines, based on the address of the second terminal device, a second data network access identifier corresponding to a session of the second terminal device. The processing unit determines, based on a first data network access identifier corresponding to the first session and the second data network access identifier, whether the first terminal device and the second terminal device use the same access network or the same backhaul network.

With reference to the fourth aspect, in some implementations of the fourth aspect, the access network includes a satellite or a satellite constellation on which an access network device is located; and the backhaul network includes a satellite over a backhaul link, the backhaul link, and a satellite constellation.

With reference to the fourth aspect, in some implementations of the fourth aspect, the first network element includes a second anchor user plane network element or an intermediate user plane network element. The second anchor user plane network element is a user plane network element other than the first anchor user plane network element anchored by the first session, and the intermediate user plane network element is configured to provide a forwarding service for communication performed between the first terminal device and the second terminal device via the first session.

With reference to the fourth aspect, in some implementations of the fourth aspect, if the first network element is the intermediate user plane network element, the determining, when the first terminal device and the second terminal device use the same access network or the same backhaul network, a first network element configured to forward the data of the first session includes: When the first terminal device and the second terminal device use the same access network or the same backhaul network, the processing unit determines to insert the first network element or use the inserted first network element.

With reference to the fourth aspect, in some implementations of the fourth aspect, if the first network element is the second anchor user plane network element, the method further includes: A session management network element migrates the first session from being anchored at the first anchor user plane network element to being anchored at the second anchor user plane network element.

With reference to the fourth aspect, in some implementations of the fourth aspect, the first network element is located on a satellite.

With reference to the fourth aspect, in some implementations of the fourth aspect, the apparatus further includes: a sending unit, configured to send first indication information to the first anchor user plane network element. The first indication information indicates the first anchor user plane network element to report the first information when a first condition is met. The first condition includes receiving data sent by the first terminal device to another terminal device and/or receiving data sent by the another terminal device to the first terminal device.

With reference to the fourth aspect, in some implementations of the fourth aspect, before the sending unit sends the first indication information to the first anchor user plane network element, the processing unit is further configured to determine, based on second information, to send the first indication information to the first anchor user plane network element. The second information includes at least one of the following: information about an access type RAT corresponding to the first session, type information of a backhaul link corresponding to the first session, or the location information of the first terminal device.

With reference to the fourth aspect, in some implementations of the fourth aspect, before the session management network element receives the first information from the first anchor user plane network element, the processing unit is further configured to insert the first network element based on third information. The third information includes at least one of the following information: the first information, satellite running and control information, the information about the access type RAT corresponding to the first session, the location information of the first terminal device, or the location information of the second terminal device.

With reference to the fourth aspect, in some implementations of the fourth aspect, the apparatus further includes: a sending unit, configured to send a packet detection rule PDR and a packet forwarding rule FAR to the first network element. The PDR and the FAR indicate the first network element to forward the data of the first session.

With reference to the fourth aspect, in some implementations of the fourth aspect, the processing unit is further configured to establish a first forwarding tunnel between the first network element and a second network element. The first forwarding tunnel is used for transmission of data between the first network element and the second network element. The second network element is a network element that forwards data of a second session established by the second terminal device.

With reference to the fourth aspect, in some implementations of the fourth aspect, the processing unit is further configured to establish a second forwarding tunnel between the first anchor user plane network element and the first network element. The second forwarding tunnel is used for transmission of data between the first anchor user plane network element and the first network element.

With reference to the fourth aspect, in some implementations of the fourth aspect, when a first access network device accessed by the first terminal device switches to a second access network device, the processing unit is further configured to determine, based on a set of to-be-switched sessions, whether the set of sessions includes the first session. When the set of sessions includes the first session, the processing unit is further configured to determine, based on the first information, a third network element to forward the data of the first session.

With reference to the fourth aspect, in some implementations of the fourth aspect, the first information further includes at least one of the following information: a source interface identifier of the first data, identification information of a local area network group to which the first terminal device belongs, network instance information used by the first anchor user plane network element to receive the first data, network instance information used by the first anchor user plane network element to send the first data, N3 or N9 tunnel information used by the first anchor user plane network element to receive the first data, or N3 or N9 tunnel information used by the first anchor user plane network element to send the first data.

For beneficial effects of the method shown in the fourth aspect and the possible designs of the fourth aspect, refer to the beneficial effects in the first aspect and the possible designs of the first aspect.

According to a fifth aspect, a communication apparatus is provided. The apparatus is configured to perform the method according to the second aspect.

The apparatus includes: a processing unit, configured to determine first information, where a first anchor user plane network element is an anchor user plane network element anchored by a first session established by a first terminal device; and a sending unit, configured to send the first information to a session management network element. The first information includes a source address of first data and/or a destination address of the first data. The first data includes data that is of the first session and that is to be sent by the first terminal device to a second terminal device and/or data that is to be sent by the second terminal device to the first terminal device. The first information is used to determine whether the first terminal device and the second terminal device use a same access network or a same backhaul network.

With reference to the fifth aspect, in some implementations of the fifth aspect, the apparatus further includes: a receiving unit, configured to receive first indication information from the session management network element. The first indication information indicates the first anchor user plane network element to report the first information when a first condition is met. The processing unit determines whether the first condition is met. When the first condition is met, the sending unit sends the first information to the session management network element. The first condition includes receiving data sent by the first terminal device to another terminal device and/or receiving data sent by the another terminal device to the first terminal device.

With reference to the fifth aspect, in some implementations of the fifth aspect, the first information further includes at least one of the following information: a source interface identifier of the first data, identification information of a local area network group to which the first terminal device belongs, network instance information used by the first anchor user plane network element to receive the first data, network instance information used by the first anchor user plane network element to send the first data, N3 or N9 tunnel information used by the first anchor user plane network element to receive the first data, or N3 or N9 tunnel information used by the first anchor user plane network element to send the first data.

For beneficial effects of the method shown in the fifth aspect and the possible designs of the fifth aspect, refer to the beneficial effects in the second aspect and the possible designs of the second aspect.

According to a sixth aspect, a communication apparatus is provided. The apparatus is configured to perform the method according to the third aspect.

The apparatus includes: a receiving unit, configured to receive a packet detection rule PDR and a packet forwarding rule FAR from a session management network element; and a processing unit, configured to forward data of a first session according to the PDR and the FAR. A first network element is a network element that forwards the data of the first session established by a first terminal device.

With reference to the sixth aspect, in some implementations of the sixth aspect, the first network element includes a second anchor user plane network element or an intermediate user plane network element. The second anchor user plane network element is a user plane network element other than a first anchor user plane network element anchored by the first session, and the intermediate user plane network element is configured to provide a forwarding service for communication performed between the first terminal device and a second terminal device via the first session.

With reference to the sixth aspect, in some implementations of the sixth aspect, the first network element is located on a satellite.

With reference to the sixth aspect, in some implementations of the sixth aspect, that the processing unit forwards the data of the first session according to the PDR and the FAR includes: The processing unit sends, according to the PDR and the FAR, the data of the first session to a second network element through a first forwarding tunnel. The second network element is a network element that forwards data of a second session established by the second terminal device.

With reference to the sixth aspect, in some implementations of the sixth aspect, that the processing unit forwards the data of the first session according to the PDR and the FAR includes: The first processing unit sends the data of the first session to a third access network device according to the PDR and the FAR. The third access network device is a network device accessed by the second terminal device.

For beneficial effects of the method shown in the sixth aspect and the possible designs of the sixth aspect, refer to the beneficial effects in the third aspect and the possible designs of the third aspect.

According to a seventh aspect, a communication apparatus is provided. The apparatus is configured to perform the method according to the first aspect. Specifically, the communication apparatus may include units and/or modules configured to perform the method according to any one of the foregoing implementations of the first aspect, for example, a processing unit and an obtaining unit.

In an implementation, a transceiver unit may be a transceiver or an input/output interface. The processing unit may be at least one processor. Optionally, the transceiver may be a transceiver circuit. Optionally, the input/output interface may be an input/output circuit.

In another implementation, a transceiver unit may be an input/output interface, an interface circuit, an output circuit, an input circuit, a pin, a related circuit, or the like on a chip, a chip system, or a circuit. The processing unit may be at least one processor, a processing circuit, a logic circuit, or the like.

According to an eighth aspect, a communication apparatus is provided. The apparatus is configured to perform the method according to the second aspect. Specifically, the communication apparatus may include units and/or modules configured to perform the method according to the second aspect, for example, a processing unit and an obtaining unit.

In an implementation, a transceiver unit may be a transceiver or an input/output interface. The processing unit may be at least one processor. Optionally, the transceiver may be a transceiver circuit. Optionally, the input/output interface may be an input/output circuit.

In another implementation, a transceiver unit may be an input/output interface, an interface circuit, an output circuit, an input circuit, a pin, a related circuit, or the like on a chip, a chip system, or a circuit. The processing unit may be at least one processor, a processing circuit, a logic circuit, or the like.

According to a ninth aspect, a communication apparatus is provided. The apparatus is configured to perform the method according to the third aspect. Specifically, the communication apparatus may include units and/or modules configured to perform the method according to the third aspect, for example, a processing unit and an obtaining unit.

In an implementation, a transceiver unit may be a transceiver or an input/output interface. The processing unit may be at least one processor. Optionally, the transceiver may be a transceiver circuit. Optionally, the input/output interface may be an input/output circuit.

In another implementation, a transceiver unit may be an input/output interface, an interface circuit, an output circuit, an input circuit, a pin, a related circuit, or the like on a chip, a chip system, or a circuit. The processing unit may be at least one processor, a processing circuit, a logic circuit, or the like.

According to a tenth aspect, this application provides a processor, configured to perform the methods according to the foregoing aspects.

Operations such as sending and obtaining/receiving related to the processor may be understood as operations such as output, receiving, and input of the processor, or operations such as sending and receiving performed by a radio frequency circuit and an antenna, unless otherwise specified, or provided that the operations do not contradict actual functions or internal logic of the operations in related descriptions. This is not limited in this application.

According to an eleventh aspect, a computer-readable storage medium is provided. The computer-readable storage medium stores program code to be executed by a device. The program code includes the method according to any one of the implementations of the first aspect to the third aspect.

According to a twelfth aspect, a computer program product including instructions is provided. When the computer program product runs on a computer, the computer is enabled to perform the method according to any one of the implementations of the first aspect to the third aspect.

According to a thirteenth aspect, a chip is provided. The chip includes a processor and a communication interface. The processor reads, through the communication interface, instructions stored in a memory, to perform the method according to any one of the implementations of the first aspect to the third aspect.

Optionally, in an implementation, the chip further includes a memory. The memory stores a computer program or instructions. The processor is configured to execute the computer program or the instructions stored in the memory. When the computer program or the instructions are executed, the processor is configured to perform the method according to any one of the implementations of the first aspect to the third aspect.

According to a fourteenth aspect, a communication system is provided, including any plurality of communication apparatuses in the communication apparatuses according to the fourth to sixth aspects.

### BRIEF DESCRIPTION OF DRAWINGS

FIG. 1 is a diagram of an architecture of a 5G system to which an embodiment of this application is applicable;
FIG. 2 is a diagram of forwarding 5G VN communication user plane data based on N19 according to an embodiment of this application;
FIG. 3 is a diagram of locally forwarding 5G VN communication user plane data according to an embodiment of this application;
FIG. 4 is a diagram in which a satellite provides access according to an embodiment of this application;
FIG. 5 is a diagram in which a satellite provides backhaul according to an embodiment of this application;
FIG. 6 is a diagram of two-dimensional expansion of a polar orbit constellation;
FIG. 7 is a schematic flowchart of a communication method according to this application;
FIG. 8 is a schematic flowchart of another communication method according to an embodiment of this application;
FIG. 9 is a schematic flowchart of still another communication method according to an embodiment of this application;
FIG. 10 is a schematic block diagram of an apparatus 1000 according to an embodiment of this application; and
FIG. 11 is a schematic block diagram of an apparatus 1100 according to an embodiment of this application.

### DESCRIPTION OF EMBODIMENTS

The following describes technical solutions of embodiments in this application with reference to accompanying drawings.

The technical solutions in embodiments of this application may be applied to various communication systems, for example, a 5G system or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions in embodiments of this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

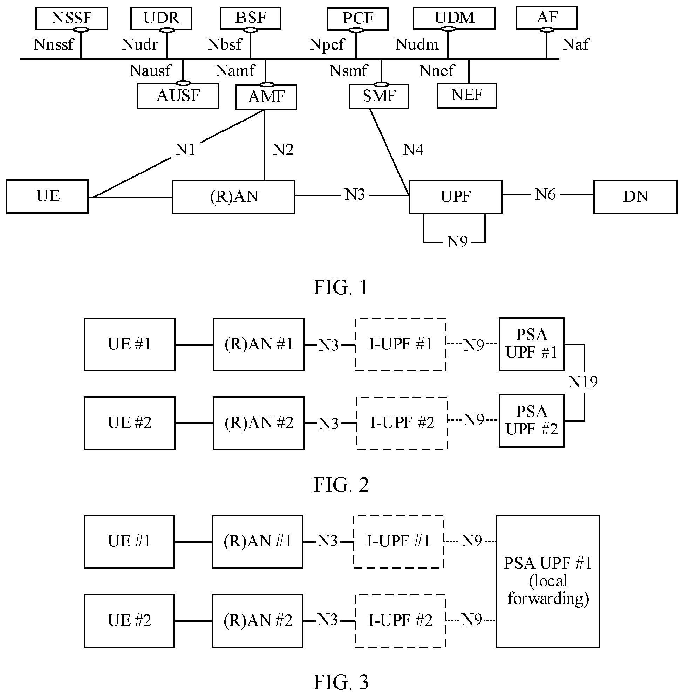

For ease of understanding embodiments of this application, a communication system to which embodiments of this application are applicable is first briefly described with reference to FIG. 1.

For example descriptions, FIG. 1 is a diagram of an architecture of a 5G system to which an embodiment of this application is applicable. FIG. 1 is a diagram of a 5G network architecture based on a service-based interface. As shown in FIG. 1, the network architecture may include but is not limited to the following network elements (or referred to as function network elements, function entities, nodes, devices, or the like): a user equipment (user equipment, UE), a (radio) access network (radio access network, (R)AN) device, an access and mobility management function (access and mobility management function, AMF) network element, a session management function (session management function, SMF) network element, a user plane function (user plane function, UPF) network element, a policy control function (policy control function, PCF) network element, a unified data management (unified data management, UDM) network element, an application function (application function, AF) network element, a data network (data network, DN), a network slice selection function (network slice selection function, NSSF), an authentication server function (authentication server function, AUSF), a network exposure function (network exposure function, NEF) network element, a binding support function (binding support function, BSF) network element, a unified data repository (unified data repository, UDR), and the like.

The following briefly describes the network elements shown in FIG. 1.
1. The UE may include various handheld devices, vehicle-mounted devices, wearable devices, or computing devices that have a wireless communication function, or other processing devices connected to a wireless modem, and various forms of terminal devices, mobile stations (mobile stations, MSs), terminals (terminals), soft terminals, or the like, for example, water meters, electricity meters, or sensors.

For example, the user equipment in embodiments of this application may be an access terminal, a subscriber unit, a subscriber station, a mobile station, a relay station, a remote station, a remote terminal, a mobile device, a user terminal (user terminal), a terminal equipment (terminal equipment), a wireless communication device, a user agent, or a user apparatus. The user equipment may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device that has a wireless communication function or another processing device connected to a wireless modem, a vehicle-mounted device, a wearable device, user equipment in a 5G network, user equipment in a future evolved public land mobile network (public land mobile network, PLMN) or in future internet of vehicles, or the like. This is not limited in embodiments of this application.

By way of example rather than limitation, in embodiments of this application, the wearable device may also be referred to as a wearable intelligent device, and is a general term of a wearable device that is intelligently designed and developed for daily wear by using a wearable technology, such as, glasses, gloves, watches, clothing, and shoes. The wearable device is a portable device that can be directly worn on the body or integrated into clothes or an accessory of a user. The wearable device is not merely a hardware device, but also implements a powerful function through software support, data exchange, and cloud interaction. Generalized wearable intelligent devices include full-featured and large-size devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In addition, the user equipment in embodiments of this application may alternatively be user equipment in an internet of thing (internet of Things, IoT) system. An IoT is an important part of development of future information technologies. A main technical feature of the IoT is connecting objects to networks using a communication technology, to implement an intelligent network of human-machine interconnection and thing-thing interconnection. In embodiments of this application, an IoT technology can implement massive connections, deep coverage, and terminal power saving using, for example, a narrowband (narrowband, NB) technology.

In addition, in embodiments of this application, the user equipment may further include a sensor, mainly configured for collecting data (some user equipment), receiving control information and downlink data from an access network device, sending an electromagnetic wave, and transmitting uplink data to the access network device.

In embodiments of this application, an apparatus configured to implement functions of the user equipment may be a user equipment, or may be an apparatus that can support the user equipment in implementing the functions, for example, a chip system or a combined component or part that can implement functions of the user equipment. The apparatus may be installed in the user equipment.

In embodiments of this application, the chip system may include a chip, or may include a chip and another discrete component. In the technical solutions provided in embodiments of this application, an example in which the apparatus configured to implement the functions of the user equipment is the user equipment is used to describe the technical solutions provided in embodiments of this application.

2. The (R)AN is configured to provide a network access function for authorized user equipment in a specific area, and can use transmission tunnels of different quality of service based on levels of the user equipment, service requirements, and the like.

The (R)AN can manage radio resources and provide an access service for the user equipment, to complete forwarding of a control signal and user equipment data between the user equipment and a core network. The (R)AN may also be understood as a base station in a conventional network.

For example, the access network device in embodiments of this application may be any communication device having a wireless transceiver function for communicating with the user equipment. The access network device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (a home evolved NodeB, HeNB, or a home NodeB, HNB), a baseband unit (baseBand unit, BBU), and an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), or the like. Alternatively, the access network device may be a gNB or a transmission point (TRP or TP) in a 5G system such as an NR system, may be one antenna panel or a group of antenna panels (including a plurality of antenna panels) of a base station in a 5G system, or may be a network node, such as a baseband unit (BBU) or a distributed unit (distributed unit, DU), that constitutes a gNB or a transmission point.

In some deployments, a gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the access network device may be a device including one or more of a CU node, a DU node, and an AAU node. In addition, the CU may be classified as an access network device in an access network (radio access network, RAN), or the CU may be classified as an access network device in the core network (core network, CN). This is not limited in this application.

3. The UPF network element mainly includes the following user plane-related functions such as data packet routing and transmission, data packet detection, service usage reporting, quality of service (quality of service, QoS) handling, lawful interception, uplink data packet detection, downlink data packet storage, and the like.

In a 5G communication system, the user plane network element may be a UPF network element. In a future communication system, the user plane network element may still be a UPF network element, or may have another name. This is not limited in this application.

For example, a UPF may include a packet data unit session anchor UPF (packet data unit session anchor UPF, PSA UPF) and an intermediate UPF (Intermediate UPF, I-UPF).

The PSA UPF is a UPF that supports a PDU session anchor function, is a UPF connected to a DN through an N6 interface, and is responsible for data transmission between the core network and the data network. All UPFs between the (R)AN and the PSA UPF are referred to as I-UPFs.

For example, an uplink classifier functionality UPF (uplink classifier functionality UPF, UL CL UPF) in embodiments of this application is a UPF that can implement functions of an uplink classifier (Uplink Classifier), and is inserted into a session of a terminal device by an SMF. Specifically, the UL CL UPF is connected to the PSA UPF through an N9 interface. For uplink data (or may be referred to as traffic, a data packet, or the like), after identification is performed on the uplink data according to a forwarding rule, data that needs to be sent to the PSA UPF is distinguished, and the data is forwarded. For downlink data, data from the PSA UPF is forwarded to the RAN through an N3 interface. In this application, the UL CL UPF may be understood as a specific I-UPF. In addition, the UL CL UPF and the PSA UPF may be integrated. For example, the UL CL UPF and a local PSA UPF (Local PSA UPF) are integrated. In other words, the UL CL UPF in embodiments of this application may be understood as implementing some functions of a network element in which the UL CL UPF and the local PSA UPF are integrated (for example, a data splitting function and a data forwarding function are implemented by the local PSA UPF).

It should be noted that a specific form of the I-UPF is not limited in embodiments of this application. The UL CL UPF is merely an example, and does not constitute any limitation on the protection scope of this application. For example, the I-UPF may alternatively be a branch point (branch point, BP) UPF (for example, an I-UPF in an internet protocol version 6 multi-home (Internet Protocol Version 6 Multi-home, IPv6 Multi-home) scenario), or the I-UPF may be the network element in which the UL CL UPF and the local PSA UPF are integrated. Alternatively, the I-UPF may be referred to as a satellite-borne (on board) UPF or the like.

4. The DN is a network for data transmission.

In the 5G communication system, the data network element may be a DN network element. In the future communication system, the data network element may still be a DN network element, or may have another name. This is not limited in this application.

5. The AMF network element mainly includes the following functions related to access and mobility, such as connection management, mobility management, registration management, access authentication and authorization, reachability management, security context management, and the like.

In the 5G communication system, the access and management network element may be an AMF network element. In the future communication system, the access management network element may still be an AMF network element, or may have another name. This is not limited in this application.

6. The SMF is mainly configured for session management, terminal device internet protocol (internet protocol, IP) address allocation and management, selection and management of user plane functions, termination of interfaces towards policy control and charging functions, downlink data notification, and the like.

In the 5G communication system, the session management network element may be an SMF network element. In the future communication system, the session management network element may still be an SMF network element, or may have another name. This is not limited in this application.

7. The PCF is configured to: support a unified policy framework to govern network behavior, provide policy rule information for a control plane function network element (for example, an AMF network element or an SMF network element), and the like.

8. The UDM may be understood as a name of the unified data management network element in a 5G architecture. The unified data management network element mainly includes the following functions: unified data management, supporting authentication credential processing in a 3GPP authentication and key agreement mechanism, user identification handling, access authorization, registration and mobility management, subscription management, short message service management, and the like.

9. The AF is configured to provide application layer information, and may interact with a policy framework via the network exposure function network element or directly interact with a policy framework to make a policy decision request, and the like.

10. The NSSF mainly includes the following functions: selecting a set of network slice instances for the UE, determining allowed network slice selection assistance information (network slice selection assistance information, NSSAI), determining a set of AMFs that can serve the UE, and the like.

11. The AUSF (authentication server function ) mainly includes the following functions: interaction with the unified data management network element to obtain user information, and performing an authentication-related function, for example, generating an intermediate key.

12. The BSF implements session binding. Specifically, the BSF is used by the AF to address the PCF.

When requesting policy control from the PCF for a session that the UE requests to establish, the SMF provides a UE identifier, a user IP address, and other information for the PCF. The PCF registers binding information (including but not limited to the UE identifier, the user IP address, and an identifier of the selected PCF) with the BSF. Then, when the UE accesses a service on the AF via the session, the AF may need to request policy authorization from a PCF for the service accessed by the UE. The PCF selected by the AF for the policy authorization needs to be consistent with the PCF selected by the SMF for the session, because the policy authorization generally triggers the PCF to adjust policy control for an association session of the SMF. The AF may obtain the corresponding PCF by querying the BSF based on the user IP address or UE identifier, and then the policy authorization is directly requested from the AF through a 5G-defined N5 interface.

13. The UDR is mainly for storage and retrieval of subscription data, policy data, application data, and other types of data.

It may be understood that the foregoing network element or a function network element may be a network element in a hardware device, a software function running on dedicated hardware, or a virtualized function instantiated on a platform (for example, a cloud platform).

14. The NEF may be understood as a name of a capability exposure network element in the 5G architecture. The capability exposure network element mainly includes the following functions: securely exposing services and capabilities provided by 3GPP network functions for third parties or internally or the like; and translation of information exchanged with the AF and information exchanged with an internal network function, for example, translation of information between an AF service identifier and internal 5G core network information such as a data network name (data network name, DNN), single network slice selection assistance information (single network slice selection assistance information, S-NSSAI), and the like.

It can be learned from FIG. 1 that interfaces between control plane network elements in FIG. 1 are service-based interfaces.

In the architecture shown in FIG. 1, names and functions of the interfaces between the network elements are as follows.
(1) N1 is an interface between the AMF and a terminal, and may be used to transfer a QoS control rule or the like to the terminal.
(2) N2 is an interface between the AMF and the RAN, and may be used to transfer radio bearer control information or the like from a core network side to the RAN.
(3) N3 is an interface between the RAN and the UPF, and is mainly used to transfer uplink and downlink user-plane data between the RAN and UPF.
(4) N4 is an interface between the SMF and the UPF, may be used to transfer information between a control plane and a user plane, including delivering a forwarding rule, a QoS control rule, a traffic statistics rule, or the like from the control plane to the user plane, and reporting user-plane information.
(5) N9 is a user plane interface between UPFs, and is used to transfer uplink and downlink user data flows between the UPFs.
(6) Service-based interfaces Nnssf, Nudr, Nausf, Nbsf, Namf, Npcf, Nsmf, Nudm, Nnef and Naf are service-based interfaces exhibited by the NSSF, UDR, AUSF, BSF, AMF, PCF, SMF, UDM, NEF, and AF respectively, and are used to invoke corresponding service-based operations.
(7) N6 is an interface between the UPF and the DN, and is used to transfer uplink and downlink user data flows between the UPF and the DN.

N1, N2, N3, N4, and N6 are interface sequence numbers. For meanings of these interface sequence numbers, refer to meanings defined in the 3rd generation partnership project (3rd generation partnership project, 3GPP) standard protocol. This is not limited herein.

It should be noted that the interfaces between the control plane network elements may alternatively be point-to-point interfaces. Details are not described herein.

It should be understood that the network architecture to which embodiments of this application can be applied is merely an example for description, and the network architecture to which embodiments of this application are applicable is not limited thereto. Any network architecture capable of implementing functions of the foregoing network elements is applicable to embodiments of this application.

It should be further understood that the AMF, SMF, UPF, PCF, UDM, and the like shown in FIG. 1 may be understood as network elements configured to implement different functions, for example, may be combined into a network slice as required. These network elements may be independent devices, may be integrated into a same device to implement different functions, may be network elements in a hardware device, may be software functions running on dedicated hardware, or may be virtualized functions instantiated on a platform (for example, a cloud platform). Specific forms of the network elements are not limited in this application.

It should be further understood that the foregoing names are defined merely for distinguishing between different functions, and should not constitute any limitation on this application. This application does not exclude a possibility that another name is used in the 5G network and another future network. For example, in a 6G network, some or all of the foregoing network elements may still use terms in 5G, or may use other names.

It should be further understood that names of the interfaces between the foregoing network elements in FIG. 1 are merely examples, and the interfaces may have other names during specific implementation. This is not specifically limited in this application. In addition, names of messages (or signaling) transmitted between the foregoing network elements are merely examples, and do not constitute any limitation on functions of the messages.

Currently, in a 5G network (for example, the communication system shown in FIG. 1), peer-to-peer communication may be performed between terminal devices. However, in a current manner, that the peer-to-peer communication may be performed between the terminal devices needs to be implemented based on a ground anchor user plane network element anchored by a session. In some scenarios (for example, in a scenario in which two terminal devices in peer-to-peer communication use a same satellite access network or a same satellite backhaul link), peer-to-peer data transmission is performed via the ground anchor user plane network element. Consequently, a data transmission latency may be increased.

For example, the terminal devices are terminal devices in a 5th generation virtual network (5G Virtual Network, 5G VN) group, and data between the terminal devices is forwarded via a ground PSA UPF. When the two terminal devices in communication access a network via a same satellite constellation or implement backhaul over a same satellite backhaul link, the data is still forwarded based on the ground PSA UPF, and consequently, a large latency is caused.

This application provides a communication method. When terminal devices in peer-to-peer communication use a same access network or a same backhaul network based on information reported by an anchor user plane network element anchored by a session, a new network element is determined to provide a forwarding service for data of the session, to improve peer-to-peer data transmission performance.

It should be understood that the method provided in embodiments of this application may be applied to a 5G communication system, for example, the communication system shown in FIG. 1. However, a scenario to which the method can be applied is not limited in embodiments of this application. For example, the method is also applicable to another network architecture including a network element that can implement a corresponding function.

To facilitate understanding of the technical solutions in embodiments of this application, before the solutions in embodiments of this application are described, some terms or concepts that may be used in embodiments of this application are first briefly described.

### 1. 5G VN

Currently, a 5G network provides a 5G VN service, where the 5G VN service is also referred to as a 5G local area network (5G Local Area Network, 5G LAN) service. The 5G VN service may be used for home communication, enterprise office, factory manufacturing, internet of vehicles, power grid reconstruction, public security organizations, or the like. The 5G VN service can provide private communication of an internet protocol (Internet protocol, IP) type, a non-IP type (for example, an Ethernet (Ethernet) type), or the like for two or more terminal devices in a group of terminal devices.

For example, devices in a factory form a 5G VN group, and different devices may send Ethernet data packets to each other. For another example, office devices (such as mobile phones, computers, or laptop computers) of employees in a department of an enterprise form a 5G VN group, and different office devices may send IP data packets to each other, or the like. If two terminal devices are not in a same 5G VN group, the two terminal devices cannot communicate with each other.

### 2. 5G VN communication data forwarding method

There are three data forwarding methods on a 5G VN communication user plane.
(1) N6-based forwarding: Uplink data of 5G VN communication is forwarded to a DN via a PSA UPF, or a PSA UPF receives downlink data from a DN.
(2) N19-based forwarding: Uplink and downlink data of 5G VN communication is forwarded between different PSA UPFs through N19. N19 may be understood as a user plane tunnel connecting different PSA UPFs in a 5G VN group. An implementation of the N19-based forwarding may be that an SMF establishes N19 between different PSA UPFs.

For ease of understanding, how to forward 5G VN communication user plane data based on N19 is described with reference to FIG. 2. FIG. 2 is a diagram of forwarding 5G VN communication user plane data based on N19 according to an embodiment of this application.

It can be learned from FIG. 2 that different devices (for example, a UE #1 and a UE #2 shown in FIG. 2) in a 5G VN group may send data packets to each other. A specific data packet transmission procedure includes the following steps.

A data packet #1 of the UE #1 is forwarded to a corresponding PSA UPF #1 over an accessed RAN #1. Transmission between the UE #1 and the RAN #1 is performed through an air interface, and transmission between the RAN #1 and the PSA UPF #1 is performed through an N3 interface.

Optionally, when the UE #1 cannot directly access the PSA UPF #1 (for example, due to a limitation of network deployment or a limitation of an excessively wide geographical location), the UE #1 needs to be bridged to an I-UPF (for example, an I-UPF #1 shown in FIG. 2), and then data of the UE #1 is forwarded to the PSA UPF #1.

A data packet #2 of the UE #2 is forwarded to a corresponding PSA UPF #2 over an accessed RAN #2. Transmission between the UE #2 and the RAN #2 is performed through an air interface, and transmission between the RAN #2 and the PSA UPF #2 is performed through an N3 interface.

Optionally, when the UE #2 cannot directly access the PSA UPF #2 (for example, due to a limitation of network deployment or a limitation of an excessively wide geographical location), the UE #2 needs to be bridged to an I-UPF (for example, an I-UPF #2 shown in FIG. 2), and then data of the UE #2 is forwarded to the PSA UPF #2.

When the data packet #1 of the UE #1 is transmitted to the PSA UPF #1, and the data packet #2 of the UE #2 is transmitted to the PSA UPF #2, transmission between the PSA UPF #1 and the PSA UPF #2 is performed through N19. For example, the PSA UPF #1 transmits the data packet #1 to the PSA UPF #2 through an N19 interface, and the PSA UPF #2 transmits the data packet #2 to the PSA UPF #1 through the N19 interface.

After receiving the data packet #2, the PSA UPF #1 may transmit the data packet #2 to the UE #1. After receiving the data packet #1, the PSA UPF #2 may transmit the data packet #1 to the UE #2, to implement data packet transmission between the UE #1 and the UE #2.

(3) Local forwarding: Different PDU sessions in a 5G VN group are anchored at a same PSA UPF, and data of a PDU session (in other words, data carried by the PDU session) is locally forwarded on the PSA UPF. Specifically, to implement local forwarding, an SMF may anchor as many PDU sessions as possible in the 5G VN group to a same PSA UPF.

For ease of understanding, how to locally forward 5G VN communication user plane data is described with reference to FIG. 3. FIG. 3 is a diagram of locally forwarding 5G VN communication user plane data according to an embodiment of this application.

It can be seen from FIG. 3 that different devices (for example, a UE #1 and a UE #2 shown in FIG. 3) in a 5G VN group may send data packets to each other. A specific data packet transmission procedure includes the following steps.

A data packet #1 of the UE #1 is forwarded to a corresponding PSA UPF #1 over an accessed RAN #1. Transmission between the UE #1 and the RAN #1 is performed through an air interface, and transmission between the RAN #1 and the PSA UPF #1 is performed through an N3 interface.

Optionally, when the UE #1 cannot directly access the PSA UPF #1 (for example, due to a limitation of network deployment or a limitation of an excessively wide geographical location), the UE #1 needs to be bridged to an I-UPF (for example, an I-UPF #1 shown in FIG. 3), and then data of the UE #1 is forwarded to the PSA UPF #1.

A data packet #2 of the UE #2 is forwarded to a corresponding PSA UPF #1 over an accessed RAN #2. Transmission between the UE #2 and the RAN #2 is performed through an air interface, and transmission between the RAN #2 and the PSA UPF #1 is performed through an N3 interface.

Optionally, when the UE #2 cannot directly access the PSA UPF #1 (for example, due to a limitation of network deployment or a limitation of an excessively wide geographical location), the UE #2 needs to be bridged to an I-UPF (for example, an I-UPF #2 shown in FIG. 2), and then data of the UE #2 is forwarded to the PSA UPF #1.

When the data packet #1 of the UE #1 is transmitted to the PSA UPF #1, and the data packet #2 of the UE #2 is transmitted to the PSA UPF #1, the PSA UPF #1 may transmit the data packet #2 to the UE #1, and transmit the data packet #1 to the UE #2, to implement data packet transmission between the UE #1 and the UE #2.

3. Packet detection rule (Packet Detection Rule, PDR) and forwarding rule (Forwarding Action Rule, FAR) configuration

For each UE (or member) in a 5G VN group, an SMF configures the following PDR and FAR (or referred to as N4 rules) for a PSA UPF anchored by a session, to enable processing of a data packet initiated by the UE.
(1) To detect data, a source interface in the PDR is set to "access side", and CN tunnel information is set to a PDU session tunnel header (such as N3 or N9 GTP-U F-TEID).
(2) To forward the data, a destination interface in the FAR is set to "5G VN internal".

For each UE in the 5G VN group, the SMF configures the following N4 rules for the PSA UPF anchored by the session, to enable processing of a data packet sent to the UE.
(1) To detect data, a source interface in the PDR is set to "5G VN internal", and a destination address is set to an IP address/a MAC address of the 5G VN group member.
(2) To forward the data, the FAR needs to include an outer header creation identifier indicating N3/N9 tunnel information, and a destination interface is set to "access side".

If forwarding is performed based on N19, the SMF needs to configure the following N4 rules for the PSA UPF anchored by the session, to process a data packet received from each N19 tunnel.
(1) To detect data, a source interface in the PDR is set to "core side", and CN tunnel information is set to an N19 tunnel header (namely, N19 GTP-U F-TEID).
(2) To forward the data, a destination interface needs to be set to "5G VN internal" in the FAR.

If forwarding is performed based on N19, the SMF needs to configure the following N4 rules for the PSA UPF anchored by the session, to process data sent to a session in the group anchored at another PSA UPF.
(1) To detect the data, a source interface in the PDR is set to "5G VN internal", and a destination address is set to an IP address/a MAC address of a UE anchored at a peer UPF of an N19 tunnel.
(2) To forward the data to a 5G VN group member anchored at another UPF through the N19 tunnel, the FAR is set to include an outer header creation identifier indicating N19 tunnel information, and a destination interface is set to "core side".

The SMF configures the following N4 rules for the PSA UPF anchored by the session, to process data packets sent by a group member connected through N6.
(1) To detect data, a source interface in the PDR is set to "core side", and a source address is set to an IP address/a MAC address of the group member.
(2) To forward the data, a destination interface in the FAR is set to "5G VN internal".

The SMF configures the following N4 rules for the PSA UPF anchored by the session, to process data packets sent to a group member connected through N6 or devices in a DN.
(1) To detect data, a source interface in the PDR is set to "5G VN internal", and a destination address is set to an IP address/a MAC address of the 5G VN group member.
(2) To forward the data, a destination interface is set to "core side" in the FAR.

When the PSA UPF anchored by the session of the UE changes, but an address of the UE does not change, the SMF updates an N4 rule configured for the UE, so that a data packet sent to the UE can be correctly forwarded.

### 4. Satellite communication and 5G convergence technology

Currently, there may be two scenarios for convergence of satellite communication and a 5GS. A first scenario is that a satellite is used as 3GPP access, and a UE accesses the 5GS via the satellite. A second scenario is that a satellite link is used as a backhaul link, and a RAN communicates with a 5G core (5G core, 5GC) network over the backhaul link (for example, the backhaul link provides a bearer for N3 or N9).

When the satellite is used as the 3GPP access, the satellite may be considered only as a radio frequency module of a RAN, to provide a transparent forwarding capability. During satellite backhaul, the satellite is used only as a bearer node and is transparent to UE data.

Alternatively, it may be considered that the satellite supports data processing. In other words, it is considered that the satellite provides a non-transparent forwarding capability or a renewable capability. Specifically, it is considered that the RAN and a UPF are deployed on the satellite.

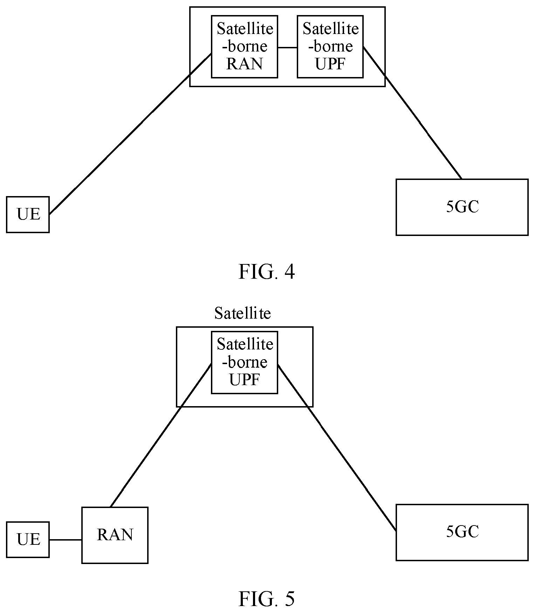

For an assumption that the satellite has the renewable capability, two scenarios are considered. A first scenario is that a satellite-borne RAN and a satellite-borne UPF are deployed on the satellite, and the UE accesses the 5GC network via the satellite-borne RAN and the satellite-borne UPF. FIG. 4 is a diagram in which a satellite provides access according to an embodiment of this application.

A second scenario is that the RAN is deployed on the ground, a satellite-borne UPF is deployed on the satellite, and the satellite link is used for backhaul. FIG. 5 is a diagram in which a satellite provides backhaul according to an embodiment of this application.

In the foregoing two scenarios, the UPF is deployed on the satellite, and networking may be implemented between satellites over an inter-satellite link.

### 5. Satellite constellation

A satellite constellation is a set of satellites that is launched into orbits and can work normally. Usually, the satellite constellation is a satellite network including some satellites configured in a specific manner. Main communication satellite constellations include an iridium satellite system, a European data relay system (European Data Relay System, EDRS), Tianlian I, Starlink (StarLink), OneWeb (OneWeb), and a navigation-related global positioning system (global positioning system, GPS) constellation, GLONASS (GLONASS) satellite constellation, a Galileo (Galileo) satellite constellation, a BeiDou satellite constellation, and the like.

Main constellation types in this application include:
a low earth orbit (low earth orbit, LEO) satellite polar orbit constellation, a medium earth orbit (mid earth orbit, MEO) satellite polar orbit constellation, an LEO tilted orbit constellation, an MEO tilted orbit constellation, and the like.

The LEO tilted orbit constellation and the MEO tilted orbit constellation do not relate to a concept of a reverse seam. In other words, when the constellation types are the LEO tilted orbit constellation and the MEO tilted orbit constellation, whether the reverse seam is supported does not need to be considered. The LEO polar orbit constellation and the MEO polar orbit constellation relate to the concept of the reverse seam. In other words, when the constellation types are the LEO polar orbit constellation and the MEO polar orbit constellation, whether the reverse seam is supported needs to be considered.

### 6. Satellite networking

The satellite networking is a network mode of satellite technologies. In this mode, a network includes a plurality of types of satellite systems in different orbits, satellite constellation is used as a basic physical architecture, and characteristics such as a large coverage area of the satellite system and obtaining target multi-source information in a multi-layer and full-spectrum band manner are fully used, so that high-reliability information that is obtained through multielement fusion processing and that has accurate time and space reference can be provided for a user. Development of a ground computer network has enabled spacecraft to join a network as a server, terminal, node or transmission line. This is also the technical basis of a concept of the satellite networking.

### 7. Satellite type

Coverage areas, movement features, propagation latencies, jitters, and the like of different types of satellites are different due to different orbit heights.

For example, satellites may be classified into a geostationary equatorial orbit (geostationary equatorial orbit, GEO) satellite, an MEO satellite, an LEO satellite, and other satellites (Other SATs) based on orbit types.

### 8. Polar orbit

The polar orbit is an artificial earth satellite orbit with an angle of 90 degrees between an orbital plane and an equatorial plane. During running, the artificial satellite can reach above north and south polar areas, that is, satellites can fly above the world. Meteorological satellites, navigation satellites, earth resource satellites, or the like that need global observations and applications use this orbit.

### 9. Reverse seam (reverse seam)

When a satellite is running in an orbit, a running direction during most of the running is consistent with that of a satellite in an adjacent orbit. Sometimes, there are two special orbits. The two orbits are adjacent orbits, but satellites running in the two orbits move in opposite directions. As observed from the south pole, a satellite on the left orbit moves from south to north, and a satellite on the right orbit moves from north to south. Due to this phenomenon, an area between the two orbits is referred to as the reverse seam.

### 10. Inter-satellite link

Non-geostationary satellites, such as an MEO and an LEO, move relative to the ground. A plurality of satellites are often needed to form a constellation to provide continuous coverage for a fixed area on the ground, on the sea, or the like. In addition, the inter-satellite link is used to implement on-satellite forwarding. Therefore, ground base stations do not need to be deployed around the world, and a coverage capability is enhanced.

There are two types of inter-satellite links: links between satellites in a same orbit, which are referred to as intra-orbit inter-satellite links; and links between orbits, which are referred to as inter-orbit inter-satellite links. The inter-orbit inter-satellite links are classified into a codirectional-orbit inter-satellite link and a reverse seam link. The codirectional-orbit inter-satellite link is a link between two adjacent orbit satellites running in a same direction, where the codirectional-orbit inter-satellite link may be disconnected due to a change in a relative location relationship between the satellites when the satellites approach above a polar area. The reverse seam link is a link between two satellites running in opposite directions, where the reverse seam link is difficult to be established or can be established only for a short period of time because the two satellites run in opposite directions.

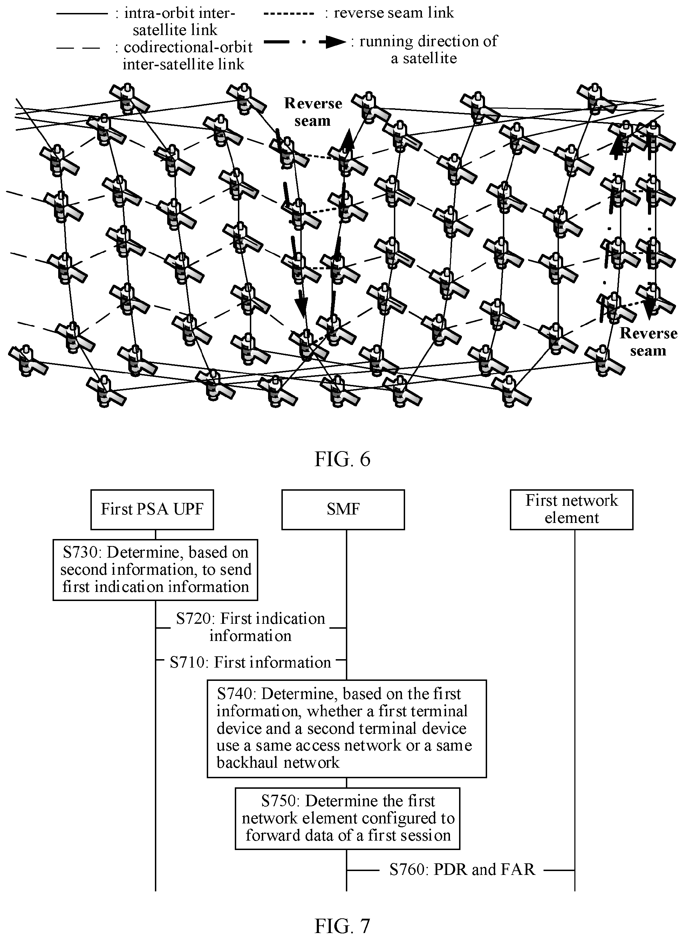

For ease of understanding, the inter-satellite link is described with reference to FIG. 6. FIG. 6 is a diagram of two-dimensional expansion of a polar orbit constellation. An inclination angle of each orbit is fixed 90 degrees (where a satellite orbit passes over the polar area).

### 11. Satellite running and control information

A topology of a non-geostationary satellite constellation (for example, a connection relationship between satellites) changes with movement of a satellite. In addition, as the satellite moves, switching needs to be performed on a satellite accessed by a ground terminal (for example, a ground terminal in an access scenario is a UE while a ground terminal in a backhaul scenario is a common satellite terminal serving a base station). Because running of the satellite is predictable, and a location and an adjacency relationship of the satellite at a different moment can be predicted, a topology change of a satellite constellation and a coverage location of each satellite are also predictable. In this application, satellite-related predictable information may be referred to as satellite running information, constellation running information, or the satellite running and control information. For ease of description, the satellite running and control information is used to represent the satellite-related predictable information in this application.

The satellite running and control information in this application includes but is not limited to one or more of ephemeris information of each satellite, location information of each satellite at a current moment obtained through calculation based on the ephemeris information, periodic stable constellation topology information (also referred to as satellite snapshot information) in each time segment, and the like. The ephemeris information of the satellite includes an orbit parameter, or a parameter like an azimuth location of the satellite obtained through calculation based on the orbit parameter. It may be understood that the ephemeris information of the satellite may be used to calculate, predict, describe, or track flight states of the satellite, such as time, a location, and a speed.

### 12. Protocol data unit (protocol data unit, PDU) session

The PDU session is an association between a terminal device and a DN, and is used to provide a PDU connectivity service. One or more quality of service (quality of service, QoS) flows (flows) that carry a service data flow may be established (or configured) in each PDU session. In this application, the service data flow carried in the QoS flow in the PDU session is referred to as data of the PDU session.

13. Transmission of data between terminal devices is performed in a peer-to-peer manner.

When two UEs perform data communication by directly using IP addresses of peer ends, there may be two communication modes. In one of the modes, there are peer-to-peer (peer-to-peer, P2P) applications on the UEs, and transmission of user plane data is to be directly performed between the UEs based on the IP addresses of the peer ends. In the other mode, the UEs belonging to a same 5G VN group perform 5G VN communication between the UEs.

For the first scenario, a PSA UPF forwards, to a DN, data to a target UE through N6, and then the DN routes a data packet to a PSA UPF corresponding to the target UE. In this case, generally, the UE first establishes a connection to a device/an application (for example, a P2P application server) in the DN, and learns of an IP address of a peer UE with help of the device/application in the DN. Therefore, the UE may directly use the IP address of the peer end as a destination address of the data packet to initiate the data communication. Because the DN is usually deployed on the ground, even if the UEs use a same satellite as 3GPP access or backhaul, data still needs to pass through the ground PSA UPF and the DN during the communication between the UEs. Consequently, a round-trip latency of the communication between the UEs is large.

For the second scenario, based on the foregoing 5G VN communication, the UEs need to be allocated to a same 5G VN group. Local forwarding or N19 forwarding is performed on communication data between the UEs based on an anchor UPF (for example, a PSA UPF). The same PSA UPF or another PSA UPF sends the data to a target UE. Currently, the PSA UPF is a PSA UPF disposed on the ground, and even if two UEs in peer-to-peer communication use a same satellite as 3GPP access or a backhaul link, during the communication between UEs, the data still needs to pass through the ground PSA UPF. Consequently, a round-trip latency of the communication between the UEs is large.

For ease of understanding of embodiments of this application, the following descriptions are provided.

First, in this application, "indicate" may be understood as "enable", and "enable" may include "directly enable" and "indirectly enable". When a piece of information is described as enabling A, the information may directly enable A or indirectly enable A, but it does not mean that the information definitely carries A.

Information enabled by the information is referred to as to-be-enabled information. In a specific implementation process, the to-be-enabled information is enabled in many manners, for example, including but not limited to the following: a manner of directly enabling the to-be-enabled information. For example, the to-be-enabled information is enabled based on the to-be-enabled information or an index of the to-be-enabled information. Alternatively, the to-be-enabled information may be indirectly enabled by enabling other information, where there is an association relationship between the other information and the to-be-enabled information. Alternatively, only a part of the to-be-enabled information may be enabled, and the remaining part of the to-be-enabled information is known or agreed on in advance. For example, specific information may alternatively be enabled based on an arrangement sequence that is of all information and that is pre-agreed on (for example, stipulated in a protocol), to reduce indication overheads to some extent. In addition, a common part of all information may be identified and enabled in a unified manner, to reduce enabling overheads caused by enabling same information separately.

Second, the terms "first", "second", and various numerical numbers (for example, "#1" and "#2") shown in this application are merely for ease of description, and are used to distinguish between objects, but are not intended to limit the scope of embodiments of this application. For example, the terms and various numerical numbers are used to distinguish between different messages, but are not for describing a particular order or sequence. It should be understood that the objects described in such a way are interchangeable in a proper circumstance, so that a solution other than embodiments of this application can be described.

Third, in this application, "preconfigured" may include "predefined", for example, defined in a protocol. "Predefined" may be implemented in a manner of storing corresponding code, a table or other related information that may be used for indication in a device (for example, including network elements) in advance. A specific implementation of "predefined" is not limited in this application.

Fourth, "storage" in embodiments of this application may mean storage in one or more memories. The one or more memories may be separately disposed, or may be integrated into an encoder or a decoder, a processor, or a communication apparatus. Alternatively, some of the one or more memories may be separately disposed, and some of the one or more memories are integrated into the decoder, the processor, or the communication apparatus. A type of the memory may be a storage medium in any form. This is not limited in this application.

Fifth, the term "and/or" in this specification is merely an association relationship for describing associated objects, and represents that three relationships may exist. For example, A and/or B may represent the following three cases: Only A exists, both A and B exist, and only B exists. In addition, the character "/" in this specification generally indicates an "or" relationship between the associated objects.

Sixth, "protocols" in embodiments of this application may be standard protocols in the communication field, for example, may include a 5G protocol, a new radio (new radio, NR) protocol, and a related protocol applied to a future communication system. This is not limited in this application.

Without loss of generality, the following uses interaction between network elements as an example to describe in detail the communication method provided in embodiments of this application.

For ease of description, an example in which a session management function network element is an SMF, a terminal device is a UE, an access network device is a RAN, a unified data management network element is a UDM, an access and mobility management function network element is an AMF, a user plane function network element is a UPF, an anchor UPF is a PSA UPF, an intermediate UPF is an I-UPF, and a data network is a DN is used below for description.

It should be noted that a name of a network device is not limited in this application.

For example, the access and mobility management function network element may be the AMF or another network element that can implement an access and mobility management function.

For another example, the session management function network element may be the SMF or another network element that can implement a session management function.

For still another example, the user plane function network element may be the UPF or another network element that can implement a user plane function.

For yet another example, the unified data management network element may be the UDM or another network element that can implement a data management function.

For still yet another example, the anchor UPF may be a PSA UPF or another network element that can implement session anchoring.

For a further example, the intermediate UPF may be the I-UPF or a UPF between another RAN and the PSA UPF, for example, a UL CL UPF.

It can be learned from the foregoing that, currently, the transmission of the data between the UEs is performed in the peer-to-peer manner. When the UEs that communicate with each other use the same satellite as the 3GPP access or backhaul, the data still needs to pass through the ground PSA UPF during the communication between the UEs. Consequently, the round-trip latency of the communication between the UEs is large. To resolve a problem of the large latency, this application proposes a communication method. A satellite-borne UPF (for example, a satellite-borne PSA UPF or an I-UPF) is used as a PSA UPF or a function-extended I-UPF, to support functions such as local forwarding and N19 forwarding, a data forwarding rule is directly configured for the satellite-borne UPF during session establishment, to enable the satellite-borne UPF to provide a data forwarding service. Alternatively, another communication method is provided. An SMF delivers a data forwarding rule after detecting and reporting occurrence of communication based on the satellite-borne UPF. However, the two communication methods may consume limited resources of a satellite. For example, the data forwarding rule is configured during the session establishment. However, if data is not forwarded subsequently, the configuration consumes the limited resources of the satellite. For another example, detection and reporting based on resource based on the satellite-borne UPF causes an increase in resource consumption of the satellite-borne UPF.

To reduce consumption of the satellite resources, this application provides another communication method. A ground UPF detects and reports occurrence of communication, and then a satellite-borne UPF is enabled to forward data. In this way, a round-trip latency of communication between UEs can be reduced, and unnecessary data forwarding configuration performed on the satellite-borne UPF can be avoided and/or detection and reporting performed by the satellite-borne UPF can be avoided. The following describes the communication method in detail with reference to the accompanying drawings.

FIG. 7 is a schematic flowchart of a communication method according to this application. The method includes the following steps.

S710: A first PSA UPF sends first information to an SMF. In other words, the SMF receives the first information from the first PSA UPF.

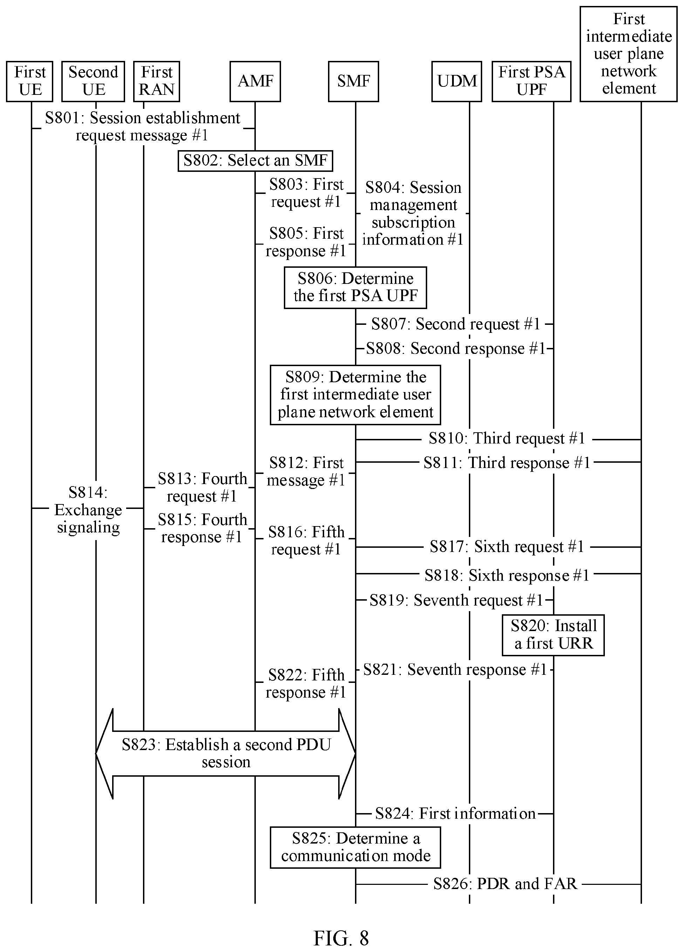

The first PSA UPF is a PSA UPF anchored by a first session (for example, a first PDU session) established by a first UE. For example, the first PSA UPF may be a ground PSA UPF anchored by default in a process of establishing the first session. For example, in the process of establishing the first session, the SMF may determine the first PSA UPF as the PSA UPF anchored by the first session, so that the first PSA UPF is responsible for transmission of data of the first session between a core network and a data network. With reference to FIG. 8, the following describes in detail how the SMF determines an anchored PSA UPF for a session in a session establishment process. Details are not described herein.

It should be noted that, in this embodiment, the first PSA UPF anchored by the first session of the first UE is used as an example for describing signaling exchange between the first PSA UPF and the SMF. Signaling exchange between a PSA UPF anchored by a session of another UE and the SMF is similar to the signaling exchange between the first PSA UPF and the SMF. Details are not repeated in this embodiment.

The first information is used by the SMF to determine whether two terminal devices (for example, a first terminal device and a second terminal device) in peer-to-peer communication use a same access network or a same backhaul network. When the two terminal devices in peer-to-peer communication use the same access network or the same backhaul network, a new network element (for example, a first network element) is determined to provide a forwarding service for data of a session. In other words, after receiving the first information, the SMF may determine, based on the first information, one first network element to provide a forwarding service for the data of the first session. The first PSA UPF anchored by the first session may no longer provide a forwarding service for the data of the first session.

In this embodiment, the SMF may determine, based on the first information reported by the first PSA UPF, that the first network element provides the forwarding service for the data of the first session. In this way, a case in which peer-to-peer data transmission can be performed based only on the first PSA UPF is avoided, and peer-to-peer data transmission performance is improved.

Specifically, the first information includes a source address of first data and/or a destination address of the first data. The first data is data from the first UE, or the first data is data destined for the first UE.

For example, the first data is data transmitted between the first UE and a second UE, and the first data includes the data that is of the first session and that is to be sent by the first UE to the second UE and/or data that is to be sent by the second UE to the first UE.

For example, the first data is the data that is of the first session and that is to be sent by the first UE to the second UE, the source address of the first data is an address of the first UE, and the destination address of the first data is an address of the second UE. For example, the source address of the first data includes but is not limited to an IP address or a MAC address of the first UE, and the destination address of the first data is not limited to an IP address or a MAC address of the second UE.

For another example, the first data is data that is to be sent by the second UE to the first UE, the source address of the first data is an address of the second UE, and the destination address of the first data is an address of the first UE. For example, the source address of the first data includes but is not limited to an IP address or a MAC address of the second UE, and the destination address of the first data is not limited to an IP address or a MAC address of the first UE.

In a possible implementation, the first UE and the second UE are two different terminal devices in a local area network group. For example, the first UE and the second UE are two UEs in a 5G VN group. In this implementation, optionally, the first information further includes at least one of the following information: identification information of the local area network group to which the first UE belongs, network instance (Network Instance) information used by the first anchor user plane network element to receive the first data, or network instance information used by the first anchor user plane network element to send the first data. Network instance information indicates a network instance. Specifically, the network instance is defined to isolate different IP domains. For example, the network instance is used to isolate access networks connected to a UPF in different IP domains, isolate UE IP addresses allocated by a plurality of data networks, or isolate transmission networks in a same PLMN. For example, when delivering a PDR and a FAR to the UPF, the SMF may further provide the network instance information, so that when receiving or sending a data packet, the UPF can determine, based on the network instance information, a network instance from which the data packet is sent or a network instance to which the data packet is sent.

In this embodiment, the first UE and the second UE are two ends of the peer-to-peer communication. The peer-to-peer communication may also be understood as (on-satellite or local) 5G VN group communication, (on-satellite or local) forwarding, (on-satellite or local) data forwarding, (on-satellite or local) loopback, (on-satellite or local) routing, or the like. For ease of description, the communication is referred to as peer-to-peer communication below.

Specifically, the foregoing on-satellite means implementing peer-to-peer communication on a satellite-borne network element. This includes but is not limited to the following scenarios.

In a scenario in which a network is accessed via a satellite constellation (for example, a scenario shown in FIG. 4), a satellite-borne UPF implements local forwarding or N19 forwarding of data, and in a scenario in which a satellite backhaul link is used as a backhaul link (for example, a scenario shown in FIG. 5), a satellite-borne UPF implements local forwarding or N19 forwarding of data.

Optionally, the first PSA UPF may send the first information to the SMF based on an indication of the SMF. The method procedure shown in FIG. 7 further includes the following steps.

S720: The SMF sends first indication information to the first PSA UPF. In other words, the first PSA UPF receives the first indication information from the SMF.

Specifically, the first indication information indicates the first PSA UPF to report the first information when a first condition is met. The first condition includes receiving data sent by the first terminal device to another terminal device and/or receiving data sent by the another terminal device to the first terminal device. The another terminal device may be understood as a terminal device other than the first terminal device.

In other words, in this embodiment, the first PSA UPF may report the first information based on the indication of the SMF, instead of independently determining to report the first information, to know an occasion for reporting the first information.

For example, the receiving data from the first UE may be receiving data sent by the first UE to the second UE, and the receiving data sent to the first UE may be receiving data sent by the second UE to the first UE. This may be understood as that there is a requirement of peer-to-peer communication between the first UE and the second UE.

Alternatively, for example, the receiving data from the first UE and/or the receiving data sent to the first UE may be understood as that the first UE has a data transmission requirement. Data transmission may be sending data and/or receiving data.

When the first condition is met, the first PSA UPF sends the first information to the SMF.

For example, that the first PSA UPF determines, based on a PDR locally configured for the first PSA UPF (for example, a destination address indicated by the PDR is successfully matched), whether the first UE has the data transmission requirement.

In a possible implementation, the first indication information may be a usage report rule (Usage Report Rule, URR) or other information indicating the first PSA UPF to report the first information.

It should be understood that the first PSA UPF reports the first information based on the indication of the SMF is merely an example, and does not constitute any limitation on the protection scope of this application. In this embodiment, the first PSA UPF may alternatively actively report the first information, or may determine, based on a preconfigured first condition, whether to report the first information.

Optionally, that the SMF sends the first indication information to the first PSA UPF may be that the SMF determines, based on some information, that the SMF needs to send the first indication information to the first PSA UPF. The method procedure shown in FIG. 7 further includes the following steps.

S730: The SMF determines, based on second information, to send the first indication information.

Specifically, the second information includes at least one of the following:
information about an access type RAT corresponding to the first session, type information of a backhaul link corresponding to the first session, or location information of the first UE.

For example, the information about the RAT indicates that the access type is a satellite access type, and the SMF infers, from the location information (for example, a cell global identifier) of the UE, that a satellite or a constellation corresponding to a satellite-borne access network device accessed by the UE is further deployed with the satellite-borne UPF. In this case, the SMF determines to send the first indication information. Information about the satellite-borne access network device and information about whether the satellite or constellation corresponding to the satellite-borne access network device is deployed with the satellite-borne UPF may be preconfigured in the SMF, or may be obtained by the SMF from an NRF.

Alternatively, for example, the type information of the backhaul link indicates that the backhaul link is satellite backhaul, and the SMF infers, from the location information (for example, a cell global identifier) of the UE, that a satellite or a constellation used by a satellite backhaul link accessed by the UE is further deployed with the satellite-borne UPF. In this case, the SMF determines to deliver the first indication information. The information about the satellite backhaul link and information about whether the satellite or constellation corresponding to the satellite backhaul link is deployed with the satellite-borne UPF may be preconfigured in the SMF, or may be obtained by the SMF from an NRF.

For example, when the first UE accesses the core network via a satellite (for example, the scenario shown in FIG. 4), the information about the RAT corresponding to the first session may be information about a satellite access type corresponding to the first session.

For example, when the backhaul link of the first UE is a satellite backhaul link (for example, the scenario shown in FIG. 5), the type information of the backhaul link corresponding to the first session may be type information of a satellite backhaul link corresponding to the first session.

For example, the location information of the first UE may be user location information (User Location Information, ULI) of the first UE.

Specifically, after the SMF receives the first information, the method procedure shown in FIG. 7 further includes the following steps.

S740: The SMF determines, based on the first information, whether the first UE and the second UE use a same access network or a same backhaul network.

In this embodiment, the SMF may determine, based on the first information received from the first PSA UPF, whether the two UEs (for example, the first UE and the second UE) in peer-to-peer communication use the same access network or the same backhaul network.

For example, the access network includes a satellite, a satellite constellation, or the like on which an access network device is located, and the backhaul network includes a satellite in a backhaul link, the backhaul link, a satellite constellation, or the like.

Alternatively, that the first UE and the second UE use the same access network may be that the first UE and the second UE use a same access network device. The access network device may be located on a satellite or a satellite constellation.

Alternatively, that the first UE and the second UE use the same backhaul network may be that the first UE and the second UE use a same satellite backhaul link.

For example, the first information includes the source address of the first data and/or the destination address of the first data. Specifically, a context of the current session (for example, the first session) locally stored by the SMF includes the address of the first UE. When the first data is the data that is to be sent by the first UE to the second UE, the first information may include only the destination address of the first data. When the first data is a data packet that is to be sent by the second UE to the first UE, the first information may include only the source address of the first data.

Specifically, the SMF or the first PSA UPF may obtain an IP address pool through division in advance. When the UE uses the satellite (or constellation) access or the satellite backhaul link, an IP address in a corresponding address pool is allocated to the UE. Therefore, when the address of the first UE and the address of the second UE are addresses allocated by the SMF or the first PSA UPF, the SMF may determine, based on the source address of the first data and/or the destination address of the first data, whether the first UE and the second UE use the same access network or the same backhaul network. For example, the SMF may obtain other information of the first UE, such as the location information and the information about the RAT, from the context of the first session. The SMF may obtain a session context of the second UE based on address information of the second UE. In the following examples, principles that the SMF can determine, based on the source address of the first data and/or the destination address of the first data, whether the first UE and the second UE use the same access network or the same backhaul network are similar. Details are not described.

Optionally, that the SMF determines, based on the first information, whether the first UE and the second UE use the same access network or the same backhaul network includes but is not limited to the following possible manners.

### Manner 1

The first information includes the address of the second UE. Specifically, that the first information includes the address of the second UE may be understood as that the source address of the first data or the destination address of the first data is the address of the second UE.

For example, the source address of the first data is the address of the first UE, and the destination address of the first data is the address of the second UE; or the source address of the first data is the address of the second UE, and the destination address of the first data is the address of the first UE.

In this implementation, the SMF queries for the session context of the second UE based on the address of the second UE, to obtain location information of the second UE. In addition, in this implementation, the first information received by the SMF corresponds to the session of the first UE. The SMF may directly query the session context of the first UE for the location information of the first UE, and does not need to query for the session context of the first UE based on the address of the first UE.

Specifically, in this implementation, that the SMF determines, based on the first information, whether the first UE and the second UE use the same access network or the same backhaul network includes:
The SMF obtains the location information of the first UE based on the session context of the first UE; the SMF obtains the location information of the second UE based on the address of the second UE; and the SMF determines, based on the location information of the first UE and the location information of the second UE, whether the first UE and the second UE use the same access network or the same backhaul network.

For example, the first UE sends the data to the second UE. The SMF determines the second UE based on the destination address of the first data, and further determines the location information of the second UE and the location information of the first UE. The SMF determines any one of the following based on the location information:
The first UE and the second UE use a same satellite for access (for example, a cell global identifier in the location information of the first UE and a cell global identifier in the location information of the second UE represent a same satellite base station); the first UE and the second UE use same satellite constellation access (for example, a cell global identifier in the location information of the first UE and a cell global identifier in the location information of the second UE represent different base stations belonging to the same satellite constellation); the first UE and the second UE use a same satellite backhaul link (for example, a cell global identifier in the location information of the first UE and a cell global identifier in the location information of the second UE represent that same or different base stations use a same satellite backhaul link); or the first UE and the second UE use a same satellite constellation backhaul network (for example, a cell global identifier in the location information of the first UE and a cell global identifier in the location information of the second UE represent that same or different base stations use a same satellite constellation backhaul network).

For example, the location information of the first UE includes ULI of the first UE. The location information of the second UE includes ULI of the second UE.

Optionally, there may be two SMFs. To be specific, an SMF #1 serves the first UE, and an SMF #2 serves the second UE. That the SMF queries for the session context of the second terminal device based on the address of the second UE may be that the SMF #1 queries for the location information of the second UE from a UDM by using the address of the second UE.

Alternatively, there may be one SMF. To be specific, when both the first UE and the second UE are served by a same SMF, the SMF obtains the ULI of the first UE from the session context of the first UE based on that the first data corresponds to the first session, then obtains the ULI of the second UE from the session context of the second UE based on the address (for example, the IP address) of the second UE, and further compares the ULI of the UE 1 and the ULI of the second UE. When the ULI of the UE 1 is the same as the ULI of the second UE, the SMF determines whether the first UE and the second UE use the same access network or the same backhaul network.

### Manner 2

The first information includes the address of the second UE. In this implementation, the SMF queries for the session context of the second UE based on the address of the second UE, to obtain a second data network access identifier (Data network access identifier, DNAI) corresponding to a session of the second UE. In addition, in this implementation, the first information received by the SMF corresponds to the session of the first UE. The SMF may directly query the session context of the first UE for a first data network access identifier corresponding to the session of the first UE. The SMF does not need to query for the session context of the first UE based on the address of the first UE.

Specifically, in this implementation, that the SMF determines, based on the first information, whether the first UE and the second UE use the same access network or the same backhaul network includes:
the SMF determines, based on the address of the second UE, the second data network access identifier corresponding to the session of the second UE; and
the SMF determines, based on the first data network access identifier corresponding to the first session and the second data network access identifier, whether the first UE and the second UE use the same access network or the same backhaul network. A data network access identifier may identify a data network DN of a user plane access application (or service). If the DN is located on the satellite, it may be understood that there is a correspondence between the DNAI and the satellite (where a one-to-one or many-to-one correspondence falls within the protection scope of this application).

It should be noted that, although this application relates to peer-to-peer communication between UEs, a scenario in which the first UE and the second UE access a service on the satellite may also exist. In this case, the SMF may determine, by viewing the first data network access identifier and the second data network access identifier, whether the first UE and the second UE use the same access network or the same backhaul network.

Optionally, when the first data network access identifier of the first UE is a first DNAI, and the second data network access identifier of the second UE is a second DNAI, the SMF may determine, depending on whether the first DNAI is the same as the second DNAI, whether the first UE and the second UE use the same access network or the same backhaul network. For example, the first DNAI is the same as the second DNAI. In this case, the SMF determines that the first UE and the second UE use the same access network or the same backhaul network. For example, one GEO satellite corresponds to one fixed DNAI, or one constellation corresponds to one DNAI.

For example, the first UE sends the data to the second UE. The SMF determines the second UE based on the destination address of the first data, further determines the second DNAI of the second UE and the first DNAI of the first UE, and determines any one of the following based on the first DNAI and the second DNAI:
The first UE and the second UE use a same satellite for access (for example, the first DNAI and the second DNAI represent that the same satellite is used); the first UE and the second UE use a same satellite constellation for access (for example, the first DNAI and the second DNAI represent different satellites belonging to the same satellite constellation); the first UE and the second UE use a same satellite backhaul link (for example, the first DNAI and the second DNAI represent that a same satellite is used); or the first UE and the second UE use a same satellite constellation backhaul network (for example, the first DNAI and the second DNAI represent that the same satellite constellation backhaul network is used).

Optionally, there may be two SMFs. To be specific, an SMF #1 serves the first UE, and an SMF #2 serves the second UE. In this case, that the SMF queries for the session context of the second terminal device based on the address of the second UE may be that the SMF #1 queries for, from a UDM by using the address of the second UE, a DNAI corresponding to the session of the second UE.

Alternatively, there may be one SMF. To be specific, when both the first UE and the second UE are served by a same SMF, the SMF obtains a DNAI of the first session from the session context of the first UE based on that the first data corresponds to the first session, then obtains a DNAI of the second UE from the session context of the second UE based on the address (for example, the IP address) of the second UE, and further compares the DNAI of the UE 1 and the DNAI of the second UE. When the DNAI of the UE 1 is the same as the DNAI of the second UE, the SMF determines whether the first UE and the second UE use the same access network or the same backhaul network.

### Manner 3

The first information includes the address of the second UE. In this implementation, the SMF queries for the session context of the second UE based on the address of the second UE. In addition, in this implementation, the first information received by the SMF corresponds to the session of the first UE. The SMF may directly query the session context of the first UE. The SMF does not need to query for the session context of the first UE based on the address of the first UE.

Specifically, in this implementation, that the SMF determines, based on the first information, whether the first UE and the second UE use the same access network or the same backhaul network includes:
the SMF determines the session context of the second UE based on the address of the second UE; and
the SMF determines, based on the session context of the first UE and the session context of the second UE, whether the first UE and the second UE use the same access network or the same backhaul network.

For example, the session context of the first UE includes N3 tunnel information #1, N9 tunnel information #1, or the like. The session context of the second UE includes N3 tunnel information #2, N9 tunnel information #2, or the like.

Optionally, when the session context of the first UE is the N3 tunnel information #1, and the session context of the second UE is the N3 tunnel information #2, the SMF may determine, depending on whether the N3 tunnel information #1 is the same as the N3 tunnel information #2, whether the first UE and the second UE use the same access network or the same backhaul network. For example, that an IP address of the N3 tunnel information #1 is the same as an IP address of the N3 tunnel information #2 represents that RANs use same satellite (or satellite constellation) backhaul. That an address of the N3 tunnel information #1 is different from an address of the N3 tunnel information #2 may represent that different RANs use same satellite (or satellite constellation) backhaul.

Optionally, when the session context of the first UE is the N9 tunnel information #1, and the session context of the second UE is the N9 tunnel information #2, the SMF may determine, depending on whether the N9 tunnel information #1 is the same as the N9 tunnel information #2, whether the first UE and the second UE use the same access network or the same backhaul network. For example, if a satellite-borne I-UPF has been inserted in advance, whether a same satellite (or satellite constellation) is used may be alternatively determined based on CN N9 tunnel information of the I-UPF.

For example, the first UE sends the data to the second UE. The SMF determines the second UE based on the destination address of the first data, and further determines the session context of the second UE and the session context of the first UE. The SMF determines any one of the following based on the session context:
The first UE and the second UE use a same satellite for access (for example, N3 tunnel information in the session context of the first UE and N3 tunnel information in the session context of the second UE represent a same satellite base station); the first UE and the second UE use a same satellite constellation for access (for example, N3 tunnel information in the session context of the first UE and N3 tunnel information in the session context of the second UE represent different base stations belonging to the same satellite constellation); the first UE and the second UE use a same satellite backhaul link (for example, N3 tunnel information in the session context of the first UE and N3 tunnel information in the session context of the second UE represent that same or different base stations use a same satellite backhaul link, or N9 tunnel information represents that a same I-UPF has been inserted for the first UE and the second UE); or the first UE and the second UE use a same satellite constellation backhaul network (for example, N3 tunnel information in the session context of the first UE and N3 tunnel information in the session context of the second UE represent that same or different base stations use a same satellite constellation backhaul network, or N9 tunnel information represents that different I-UPFs that use a same satellite constellation backhaul network have been inserted for the first UE and the second UE).

That the SMF determines, based on the first information, whether the first UE and the second UE use the same access network or the same backhaul network includes:
When the first terminal device and the second terminal device do not use the same access network and the same backhaul network, the SMF may not need to determine the first network element configured to forward the data of the first session. In other words, a network element providing the forwarding service for the data of the first session is still the first anchor user plane network element.

When the first UE and the second UE use the same access network or the same backhaul network, the SMF needs to insert one first network element to provide the forwarding service for the data of the first session. The method procedure shown in FIG. 7 further includes the following steps.

S750: The SMF determines the first network element configured to forward the data of the first session.

In a possible implementation, the first network element is a second anchor user plane network element. The second anchor user plane network element is a user plane network element other than the first anchor user plane network element anchored by the first session.

In this implementation, determining the first network element may be understood as that the first session established by the first UE is migrated (or relocated (relocated)) from being anchored at the first anchor user plane network element to being anchored at the second anchor user plane network element.

In another possible implementation, the first network element is an intermediate user plane network element. The intermediate user plane network element is configured to provide a forwarding service for communication performed between the first terminal device and the second terminal device via the first session.

In this implementation, determining the first network element may be understood as that the SMF inserts a network element providing the forwarding service for the data of the first session established by the first UE. For example, the SMF determines to insert the first network element or use the inserted first network element.

It should be understood that, in this implementation, the anchor UPF anchored by the first session is still the first PSA UPF, but a data forwarding function is implemented by the inserted intermediate user plane network element. Another function (for example, address allocation) implemented by the anchor UPF is still implemented by the first PSA UPF.

It should be noted that, when the first network element is the intermediate user plane network element, the SMF may insert the first network element before receiving the first information. For example, the SMF inserts the first network element in the process of establishing the first session, and after receiving the first information, the SMF determines whether to enable a function of forwarding the data of the first session by the inserted first network element. For ease of understanding, the following describes a method procedure of inserting the first network element in a session establishment process with reference to FIG. 8. Alternatively, the SMF may insert the first network element after receiving the first information.

Optionally, if the SMF has inserted the first network element before receiving the first information, the first information may include information indicating a transmission tunnel of the first PSA UPF (for example, N19 tunnel information). It may be understood as that, in a process of inserting the first network element before the first information is received, the SMF may learn of tunnel information of the first network element by exchanging signaling with the first network element, and the SMF notify the first PSA UPF of the tunnel information of the first network element by exchanging signaling with the first PSA UPF. Specifically, a tunnel information exchange procedure is described in detail in FIG. 8. Details are not described herein.

Alternatively, if the SMF inserts the first network element after receiving the first information, the first information may include information indicating a transmission tunnel between the first PSA UPF and the access network device (for example, AN tunnel information).

For example, that the first network element is an intermediate user plane network element includes that the first network element is an I-UPF or a UL CL UPF. For example, a function of the I-UPF or the UL CL UPF is enhanced, so that the I-UPF or the UL CL UPF has a data forwarding function. That the intermediate user plane network element is configured to provide a forwarding service for communication performed between the first UE and the second terminal device via the first session may be understood as that the I-UPF or the UL CL UPF provides a local forwarding service or an Nx forwarding service for the communication performed between the first UE and the second terminal device via the first session.

For example, that the first network element is an intermediate user plane network element includes that the first network element is a UL CL UPF and a local anchor user plane network element (local PSA UPF). For example, the first network element is a network element in which the UL CL UPF and the local PSA UPF are integrated (which may be referred to as the UL CL UPF and the local PSA UPF). The UL CL UPF is a common UL CL UPF and is configured to split data to the local PSA UPF. The local PSA UPF has a data forwarding function. The local PSA UPF is not the anchor user plane network element anchored by the session. The local PSA UPF may be understood as a function network element forwarding the data of the session. For example, the local PSA UPF is a UPF anchored by a session corresponding to a service on the satellite. That the intermediate user plane network element is configured to provide a forwarding service for communication performed between the first UE and the second terminal device via the first session may be understood as that the local PSA UPF provides a local forwarding service or an Nx forwarding service for the communication performed between the first UE and the second terminal device via the first session.

In a possible implementation, the first network element is located on the ground.

In another possible implementation, the first network element is located on the satellite. In other words, the first network element determined by the SMF may be a satellite-borne first network element, to reduce a data transmission latency when the first UE and the second UE in peer-to-peer communication use the same satellite access network or the same satellite backhaul link.

For example, when the first UE and the second UE use the same satellite access network, the first PSA UPF anchored by the first session established by the first UE is migrated to a satellite-borne PSA UPF #1. Similarly, a PSA UPF #2 anchored by a second session established by the second UE is migrated to a satellite-borne PSA UPF #2. If the satellite-borne PSA UPF #1 and the satellite-borne PSA UPF #2 are a same satellite-borne PSA UPF, the data transmission between the first UE and the second UE is implemented by the satellite-borne PSA UPF #1 by completing local forwarding. If the satellite-borne PSA UPF #1 and the satellite-borne PSA UPF #2 are different satellite-borne PSA UPFs, an N19 tunnel is established between the satellite-borne PSA UPF #1 and the satellite-borne PSA UPF #2, and the data transmission between the first UE and the second UE is implemented through N19 forwarding between the satellite-borne PSA UPF #1 and the satellite-borne PSA UPF #2.

In a possible implementation, when it is determined that the first UE and the second UE use a same satellite, the SMF may directly determine to insert the first network element on the satellite/use the inserted first network element to provide the forwarding service for the data of the first session.

For example, the second UE sends the first data to the first UE. The SMF determines the second UE based on the source address of the first data, further determines the location information of the second UE and the location information of the first UE, and further determines, based on the location information, that the second UE and the first UE use the same satellite or satellite constellation access or backhaul network. In this case, the SMF determines that the first network element provides the forwarding service for the data of the first session of the first UE. The first network element may be a satellite-borne PSA UPF or a satellite-borne I-UPF. For example, the first network element is inserted into the satellite or satellite constellation.

In another possible implementation, when it is determined that the first UE and the second UE use the same access network or backhaul network, the first network element needs to be inserted to provide the forwarding service for the data of the first session. However, if satellites used by the first UE and the second UE are not determined, the first network element may be further determined based on third information.

For example, the SMF determines the second UE based on the source address or the destination address of the first data, and further determines, based on the location information (for example, the cell global identifier) of the second UE and the location information (for example, the cell global identifier) of the first UE, that the second UE and the first UE use the same access network. In this case, the SMF determines that the first network element provides the forwarding service for the data of the first session of the first UE. The first network element may be a locally deployed ground PSA UPF or I-UPF.

For example, when determining that the first terminal device and the second terminal device use the same access network or the same backhaul network (for example, the same satellite), the SMF may insert the first network element on the same access network or the same backhaul network or select the inserted first network element to forward the data.

For example, when determining that the first terminal device and the second terminal device use the same access network or the same backhaul network, the SMF inserts the first network element based on the third information. It may also be understood as that when a satellite on which the first network element is located is not determined, the SMF may determine the first network element based on the third information.

Specifically, the third information includes at least one of the following information:
the first information, satellite running and control information, the information about the access type RAT corresponding to the first session, information about an access type RAT corresponding to the second session, the location information of the first terminal device, or the location information of the second terminal device.

For example, the third information includes the information about the access type RAT corresponding to the first session, the information about the access type RAT corresponding to the second session, the location information of the first terminal device, and the location information of the second terminal device. The SMF determines, based on the location information of the first UE and the location information of the second UE (for example, the cell global identifier of the first UE and the cell global identifier of the second UE), that the first terminal device and the second terminal device use a same satellite-borne RAN. In this case, the SMF determines to insert an I-UPF or a PSA UPF into a satellite corresponding to the satellite-borne RAN as the first network element.

For another example, the third information includes the satellite running and control information, the location information of the first terminal device, and the location information of the second terminal device. The SMF determines, based on the location information (for example, the cell global identifiers), that a base station accessed by the first terminal device and a base station accessed by the second terminal device use different satellites in a same satellite constellation, for example, use two different satellites in a same LEO satellite constellation. In this case, the SMF may select, as the first network element based on the satellite running and control information, an I-UPF or a PSA UPF on an LEO satellite adjacent to a satellite on which two RANs to which the first terminal device and the second terminal device belongs are located.

For still another example, the third information includes the location information of the first terminal device and the location information of the second terminal device. The SMF determines, based on the location information (for example, the cell global identifiers), that the first terminal device and the second terminal device use the same satellite backhaul link, for example, use a same GEO satellite. In this case, the SMF determines that an I-UPF or a PSA UPF on the GEO satellite is used as the first network element.

For yet another example, the third information includes the satellite running and control information, the location information of the first terminal device, and the location information of the second terminal device. The SMF determines, based on the location information (for example, cell global identifiers), that a base station accessed by the first terminal device and a base station accessed by the second terminal device use a same satellite backhaul network, for example, use a same LEO satellite constellation. In this case, the SMF determines, based on the satellite running and control information, an I-UPF or a PSA UPF on an LEO satellite that is serving the base stations.

For still yet another example, the third information includes the first information. The SMF determines, based on the network instance information included in the first information, that a RAN accessed by the first terminal device and a RAN accessed by the second terminal device use a same satellite backhaul link, for example, use a same GEO satellite. In this case, the SMF determines that an I-UPF or a PSA UPF on the GEO satellite is used as the first network element.

Further, to enable the function of forwarding the data of the first session by the first network element, the SMF needs to configure a PDR and a FAR for the first network element. The method procedure shown in FIG. 7 further includes the following step.

S760: The SMF sends the PDR and the FAR to the first network element. In other words, the first network element receives the PDR and the FAR from the SMF.

After the first network element is inserted, to enable the first network element to forward the data locally or forward the data based on Nx, the SMF sends traffic control rules (for example, the PDR and the FAR) to indicate the first network element to perform local forwarding or Nx-based forwarding on a received data packet. Further, the traffic control rules may further indicate the first network element to send the received data packet to an internal interface of the first network element. The internal interface implements the local forwarding or Nx-based forwarding.

Specifically, to locally forward, via the first network element, a data packet sent by the first UE to the second UE, the PDR includes the destination address of the first data (when the first data is sent by the first UE to the second UE) or the source address of the first data (when the first data is sent by the second UE to the first UE), and the FAR includes an N4 session corresponding to a second session whose destination interface is the second UE.

Alternatively, based on a data plane forwarding mechanism of 5G VN group communication, the PDR and the FAR are configured on the first network element to enable the 5G VN group communication. For specific configurations of the PDR and the FAR, refer to the foregoing descriptions about the PDR and the FAR. Details are not described herein again.

It should be understood that, in the foregoing steps S710 to S770, how the SMF determines the first network element for the first session established by the first UE is described in detail. For the second UE, the SMF also determines a second network element for the second session established by the second UE. For example, a PSA UPF anchored in a process of establishing the second session established by the second UE is a PSA UPF #2. The SMF may determine the second network element based on information reported by the PSA UPF #2. For a specific procedure, refer to the foregoing steps S710 to S770. Roles of the first UE and the second UE are exchanged. To be specific, the second UE becomes the first UE in steps S710 to S770 from a perspective of the second UE. Details are not described herein again.

In a possible implementation, when the first network element and the second network element that are determined by the SMF are a same network element, the peer-to-peer communication between the first UE and the second UE may be implemented by the first network element through local forwarding.

In another possible implementation, when the first network element and the second network element that are determined by the SMF are not a same network element, the peer-to-peer communication between the first UE and the second UE may be implemented through forwarding between the first network element and the second network element based on Nx (for example, N19).

In this implementation, a first forwarding tunnel (for example, N19) needs to be established between the first network element and the second network element. The first forwarding tunnel is used for transmission of data between the first network element and the second network element.

In addition, when there is a communication requirement between the first UE and another UE (for example, a third UE), and a third session established by the third UE is anchored at the first PSA UPF, a second forwarding tunnel may be established between the first PSA UPF and the first network element. The second forwarding tunnel is used for transmission of data between the first PSA UPF and the first network element.

For ease of understanding, a procedure of the peer-to-peer communication between the first UE and the second UE is described in detail with reference to FIG. 8. FIG. 8 is a schematic flowchart of another communication method according to an embodiment of this application. The method includes the following steps.

S801: A First UE sends a session establishment request message #1 to an AMF. In other words, the AMF receives the session establishment request message #1 from the first UE.

The session establishment request message #1 is used to request to establish a first PDU session. Specifically, the session establishment request message #1 includes but is not limited to a DNN #1, S-NSSAI #1, and other information corresponding to the first UE.

It should be understood that the session establishment request message #1 is forwarded to the AMF over a first RAN. The first RAN further sends ULI of the first UE, a RAT, and other information to the AMF. For ease of differentiation, the ULI of the first UE is denoted as ULI #1 and the RAT is denoted as a RAT #1 in the following descriptions.

For example, the ULI #1, the RAT #1, and/or other information may be carried in the session establishment request message #1 and sent to the AMF, or may be sent to the AMF via another message.

It should be noted that, the first UE sends the session establishment request message #1 to the AMF over the first RAN. In other words, although the AMF finally receives the session establishment request message #1, the first UE may not perceive an entity that finally receives the session establishment request message #1, and only perceives sending the session establishment request message #1 to the first RAN. In addition, in a sending process, the first RAN may change a form/content of the message, and a changed message that can be used to notify the AMF of the session establishment request message #1 may be considered as the session establishment request message #1 in this embodiment of this application.

S802: The AMF selects an SMF.

Specifically, the AMF selects, based on the received DNN #1, S-NSSAI #1, ULI #1, RAT #1, and other information, the SMF for establishing the first PDU session.

It should be noted that, how the AMF specifically selects the SMF is not limited in this embodiment of this application. For details, refer to related descriptions about selecting an SMF by an AMF in a current PDU session establishment process. After selecting the SMF for creating the first PDU session, the AMF may request, via a first request, the SMF to create a session management (session management, SM) context #1 corresponding to the first PDU session.

The method procedure shown in FIG. 8 further includes the following step.

S803: The AMF sends a first request #1 to the SMF. In other words, the SMF receives the first request #1 from the AMF.

The first request #1 is used to request to create the SM context #1. Specifically, the first request #1 includes an identifier of the first UE, the DNN #1, the S-NSSAI #1, the ULI #1, the RAT #1, and other information. The identifier of the first UE includes but is not limited to any one of the following: a subscription permanent identifier (Subscription Permanent Identifier, SUPI), a subscription concealed identifier (Subscription Concealed Identifier, SUCI), a generic public subscription identifier (Generic Public Subscription Identifier, GPSI), a permanent equipment identifier (Permanent Equipment Identifier, PEI), or a (Mobile Subscriber International ISDN/PSTN number, MSISDN) of the first UE. An ISDN is an integrated service digital network (Integrated Service Digital Network), and a PSTN is a public switched telephone network (Public Switched Telephone Network), and the like. The MSISDN may be understood as an identity of the terminal that can be disclosed externally, for example, a phone number of the terminal. For ease of description, an example in which the identifier of the first UE is an SUPI #1 is used below for description.

For example, the first request #1 may be referred to as a first PDU session create SM context request (Nsmf_PDUSession_CreateSMContext Request).

Further, the SMF may obtain session management subscription information #1 from a UDM. The method procedure shown in FIG. 8 may further include the following steps.

S804: The SMF obtains the session management subscription information #1 from the UDM.

In a possible implementation, the SMF may send a query request #1 to the UDM to request to obtain the session management subscription information #1.

In another possible implementation, the SMF may send a subscription request #1 to the UDM to request to obtain the session management subscription information #1.

It should be noted that a manner in which the SMF obtains the session management subscription information #1 from the UDM is not limited in this application, and may be query or subscription. Details are not described in this application.

In this embodiment, the session management subscription information #1 obtained by the SMF further includes peer-to-peer transmission indication information #1. The peer-to-peer transmission indication information #1 indicates that transmission of data of the first PDU session is allowed to be performed in a peer-to-peer manner. For example, the peer-to-peer transmission indication information #1 indicates that the transmission of the data of the first PDU session corresponding to the DNN #1 and the S-NSSAI #1 is performed in the peer-to-peer manner.

For example, the first UE may be a member of a 5G VN group. When the first UE is a member of a 5G VN group, the session management subscription information #1 further includes information about the 5G VN group. For example, the session management subscription information #1 further includes identification information of the 5G VN group.

S805: The SMF sends a first response #1 to the AMF. In other words, the AMF receives the first response #1 from the SMF.

The first response #1 is used to respond to the first request #1, where the first response #1 indicates that the first PDU session establishment request is accepted.

For example, the first response #1 may be referred to as a first PDU session create SM context response (Nsmf_PDUSession_CreateSMContext Response).

S806: The SMF determines a first PSA UPF.

Specifically, the SMF determines, based on at least one of the RAT #1, the ULI #1, the DNN #1, the S-NSSAI #1, the session management subscription information #1, and other information, one ground first PSA UPF as a PSA UPF anchored by the first PDU session. For example, when the RAT #1 represents satellite access, although a UPF is deployed on a satellite, the SMF determines the ground UPF as the PSA UPF by default. For another example, when the RAT #1 represents ground access, and a base station corresponding to a cell global identifier included in the ULI #1 uses satellite backhaul, although a UPF is deployed on a satellite, the SMF determines the ground UPF as the PSA UPF by default. Alternatively, session subscription data associated with the DNN #1 and S-NSSAI #1 requires that ground UPF be determined as the PSA UPF by default.

For example, the SMF may allocate an IP address #1 to the first UE. For example, the SMF may perform division to allocate one address pool to the RAT #1, so that all addresses obtained by the UE that accesses a network in an access manner indicated by the RAT #1 belong to an IP range corresponding to the address pool.

Further, after the SMF determines the first PSA UPF, the method procedure shown in FIG. 8 further includes the following steps.

S807: The SMF sends a second request #1 to the first PSA UPF. In other words, the first PSA UPF receives the second request #1 from the SMF.

The second request #1 is used to obtain uplink N9 tunnel (N9 channel, N9 CN) information #1. The uplink N9 CN information #1 includes address information of the first PSA UPF and tunnel ID information allocated by the first PSA UPF, and is sent to the first RAN to establish an uplink N9 tunnel.

S808: The first PSA UPF sends a second response #1 to the SMF. In other words, the SMF receives the second response #1 from the first PSA UPF.

The second response #1 includes the uplink N9 CN information #1.

Optionally, if the SMF does not allocate the IP address #1 to the first UE in step S806, the SMF may further require the first PSA UPF allocate the IP address #1 to the first UE. In this case, the second response #1 may further include the IP address #1 of the first UE.

Optionally, in a process of establishing the first PDU session, the SMF may further determine one first network element, so that a network element that provides a forwarding service for the first PDU session may be changed from the first PSA UPF to the first network element.

For example, a possible form of the first network element is described in detail in the embodiment shown in FIG. 7. Details are not described herein again. For ease of description, in this embodiment, an example in which peer-to-peer communication can be performed based on a satellite-borne first intermediate user plane network element when the satellite peer-to-peer communication occurs, that is, the first network element is a satellite-borne I-UPF, is used for description.

S809: The SMF determines a first intermediate user plane network element.

Specifically, the SMF determines the first intermediate user plane network element based on related information provided by the first RAN.

For example, the SMF determines the first intermediate user plane network element based on at least one of the RAT #1, TAI information #1 in the ULI #1, NGCI information #1 in the ULI #1, or satellite running and control information.

For example, the RAT #1 represents the satellite access, the TAI information and NGCI information in the ULI #1 represent information about the first RAN currently used by the first UE. The SMF may determine a UPF that uses a same satellite as the first RAN as the first intermediate user plane network element. The SMF may further determine, based on the satellite running and control information indication, a UPF on a satellite adjacent to a satellite used by the first RAN as the first intermediate user plane network element.

For another example, the RAT #1 represents the ground access, and the TAI information and the NGCI information in the ULI #1 represent information about the first RAN currently used by the first UE. The SMF determines, based on the information, that the first RAN uses a satellite backhaul link, and the SMF determines a UPF on a corresponding satellite as the first intermediate user plane network element.

For still another example, the SMF may further determine, based on the TAI information and the NGCI information in the ULI #1, that the first RAN currently uses a satellite constellation as a backhaul link. Therefore, the SMF may further determine, based on the satellite running and control information, a UPF on a satellite that is serving the first RAN, or a UPF on a satellite above the first RAN as the first intermediate user plane network element. After the SMF determines the first intermediate user plane network element, the method procedure shown in FIG. 8 further includes the following steps.

S810: The SMF sends a third request #1 to the first intermediate user plane network element. In other words, the first intermediate user plane network element receives the third request #1 from the SMF.

The third request #1 is used to request the first intermediate user plane network element to allocate uplink N3 CN information #1. The uplink N3 CN information # information includes address information of the first intermediate user plane network element and tunnel ID information allocated by the first intermediate user plane network element. The information is used to establish an N3 tunnel between the first RAN and the first intermediate user plane network element. Specifically, the third request #1 includes the uplink N9 CN information #1. The uplink N9 CN information # information is used to establish an N9 tunnel between the first PSA UPF and the first intermediate user plane network element.

S811: The first intermediate user plane network element sends a third response #1 to the SMF. In other words, the SMF receives the third response #1 from the first intermediate user plane network element.

The third response #1 is used to respond to the third request #1. Specifically, the third response #1 includes the uplink N3 CN information #1.

It should be understood that steps S809 to S811 in FIG. 8 may be performed before steps S806 to S808. A sequence of performing the step of determining the first PSA UPF and the step of determining the first intermediate user plane network element is not limited in this application.

S812: The SMF sends a first message #1 to the AMF. In other words, the AMF receives the first message #1 from the SMF.

The first message #1 includes the uplink N3 CN information #1, the IP address #1, a first PDU session establishment accept message, and other information.

For example, the first message #1 may be referred to as N1N2 message transfer (Namf_Communication_N1N2MessageTransfer).

S813: The AMF sends a fourth request #1 to the first RAN. In other words, the first RAN receives the fourth request #1 from the AMF.

The fourth request #1 is used to request to establish an N2 PDU session. Specifically, the fourth request #1 includes the uplink N3 CN information #1 and the IP address #1.

S814: The first RAN exchanges signaling with the first UE, to request the first UE to establish a session, where the signaling includes a session establishment accept message.

S815: The first RAN sends a fourth response #1 to the AMF. In other words, the AMF receives the fourth response #1 from the first RAN.

The fourth response #1 is used to respond to the fourth request #1. Specifically, the fourth response #1 includes downlink N3 AN information #1 allocated by the first RAN, and the like.

S816: The AMF sends a fifth request #1 to the SMF. In other words, the SMF receives the fifth request #1 from the AMF.

The fifth request #1 includes the downlink N3 AN information #1 and the like.

Optionally, the fifth request #1 may be a first PDU session SM context update (Nsmf_PDUSession_UpdateSMContext) request message.

S817: The SMF sends a sixth request #1 to the first intermediate user plane network element. In other words, the first intermediate user plane network element receives the sixth request #1 from the SMF.

The sixth request #1 includes the downlink N3 AN information #1.

Optionally, the sixth request #1 may be an N4 session modification request.

S818: The first intermediate user plane network element sends a sixth response #1 to the SMF. In other words, the SMF receives the sixth response #1 from the first intermediate user plane network element.

The sixth response #1 is used to respond to the sixth request #1. Specifically, the sixth response #1 includes downlink N9 CN information #1.

S819: The SMF sends a seventh request #1 to the first PSA UPF. In other words, the first PSA UPF receives the seventh request #1 from the SMF.

The seventh request #1 includes the downlink N9 CN information #1.

Optionally, the seventh request #1 may be an N4 session modification request.

In a possible implementation, for non-5G VN communication, the seventh request #1 further includes a first PDR and first indication information (for example, a first URR). The first PDR includes at least one of the following information:
information indicating whether data is from a satellite access network device, information indicating whether an access network source interface uses satellite backhaul, information indicating whether a network instance uses satellite backhaul, the downlink N9 CN information #1, the uplink N9 CN information #1, or destination address information #1, where the destination address information #1 includes a destination IP address range #1 or set #1.

Specifically, when the UPF is used to allocate an address, the destination IP address range #1 corresponds to an address pool range managed by the first PSA UPF. When the SMF is used to allocate an address, the destination IP address range #1 corresponds to an address pool range allocated by the SMF.

A reporting trigger of the first URR includes that a peer-to-peer communication requirement occurs.

In another possible implementation, for 5G VN communication, the seventh request #1 further includes a first PDR, a first FAR, and other rules, and a first URR. A reporting trigger of the first URR includes that a peer-to-peer communication requirement occurs. For example, a destination IP or destination MAC corresponding to the first PDR is successfully matched.

S820: The first PSA UPF installs the first URR.

S821: The first PSA UPF sends a seventh response #1 to the SMF. In other words, the SMF receives the seventh response #1 from the first PSA UPF.

S822: The SMF sends a fifth response #1 to the AMF. In other words, the AMF receives the fifth response #1 from the SMF.

The fifth response #1 is used to respond to the fifth request #1.

Optionally, the fifth response #1 may be a first PDU session SM context update (Nsmf_PDUSession_UpdateSMContext) response message.

It should be understood that a procedure of establishing a PDU session by another UE is similar to the foregoing procedure of establishing the first PDU session by the first UE. The embodiment further includes the following step.

S823: A second terminal device establishes a second PDU session.

Similar to the foregoing procedure of establishing the first PDU session by the first terminal device, that the second terminal device establishes the second PDU session includes the following steps (not shown in FIG. 8).

Step 1: The second terminal device sends a session establishment request message #2 to the AMF. In other words, the AMF receives the session establishment request message #2 from the second terminal device.

The session establishment request message #2 is used to request to establish the second PDU session. Specifically, the session establishment request message #2 includes but is not limited to a DNN #2, S-NSSAI #2, and other information corresponding to the second UE.

It should be understood that the session establishment request message #2 is forwarded to the AMF over a second RAN. The second RAN further sends ULI #2 of the second UE, an RAT #2, and other information to the AMF.

For example, the ULI #2, the RAT #2, and/or other information may be carried in the session establishment request message #2 and sent to the AMF, or may be sent to the AMF via another message.

It should be noted that, the second UE sends the session establishment request message #2 to the AMF over the second RAN. In other words, although the AMF finally receives the session establishment request message #2, the second UE may not perceive an entity that finally receives the session establishment request message #2, and only perceives sending the session establishment request message #2 to the second RAN. In addition, in a sending process, the second RAN may change a form/content of the message, and a changed message that can be used to notify the AMF of the session establishment request message #2 may be considered as the session establishment request message #2 in this embodiment of this application.

Step 2: The AMF selects an SMF.

Specifically, the AMF selects, based on the received DNN #2, S-NSSAI #2, ULI #2, RAT #2, and other information, the SMF for establishing the second PDU session.

Step 3: The AMF sends a first request #2 to the SMF. In other words, the SMF receives the first request #2 from the AMF.

The first request #2 is used to request to create an SM context #2. Specifically, the first request #2 includes an identifier of the second UE, the DNN #2, the S-NSSAI #2, the ULI #2, the RAT #2, and other information. The identifier of the second UE includes but is not limited to any one of the following:
an SUPI, an SUCI, a GPSI, a PEI, or an MSISDN of the second UE. For ease of description, an example in which the identifier of the second UE is an SUPI #2 is used below for description.

For example, the first request #2 may be referred to as a second PDU session create SM context request (Nsmf_PDUSession_CreateSMContext Request).

Step 4: The SMF obtains session management subscription information #2 from the UDM.

In a possible implementation, the SMF may send a query request #2 to the UDM to request to obtain the session management subscription information #2.

In another possible implementation, the SMF may send a subscription request #2 to the UDM to request to obtain the session management subscription information #2.

It should be noted that a manner in which the SMF obtains the session management subscription information #2 from the UDM is not limited in this application, and may be query or subscription. Details are not described in this application.

In this embodiment, the session management subscription information #2 obtained by the SMF further includes peer-to-peer transmission indication information #2. The peer-to-peer transmission indication information #2 indicates that transmission of data of the second PDU session is allowed to be performed in a peer-to-peer manner. For example, the peer-to-peer transmission indication information #2 indicates that the transmission of the data of the second PDU session corresponding to the DNN #2 and the S-NSSAI #2 is performed in the peer-to-peer manner.

For example, the second UE may be a member of a 5G VN group. When the second UE is a member of a 5G VN group, the session management subscription information #2 further includes information about the 5G VN group. For example, the session management subscription information #2 further includes identification information of the 5G VN group.

Step 5: The SMF sends a first response #2 to the AMF. In other words, the AMF receives the first response #2 from the SMF.

The first response #2 is used to respond to the first request #2, where the first response #2 indicates that the second PDU session establishment request is accepted.

For example, the first response #2 may be referred to as a second PDU session create SM context response (Nsmf_PDUSession_CreateSMContext Response).

Step 6: The SMF determines a second PSA UPF.

Specifically, the SMF determines one ground second PSA UPF based on at least one of the RAT #2, the ULI #2, the DNN #2, the S-NSSAI #2, the session management subscription information #2, and other information.

For example, the SMF may allocate an IP address #2 to the second UE. For example, the SMF may perform division to allocate one address pool to the RAT #2, so that all addresses obtained by a UE that accesses the network in an access manner indicated by the RAT #2 belong to an IP range corresponding to the address pool.

Step 7: The SMF sends a second request #2 to the second PSA UPF. In other words, the second PSA UPF receives the second request #2 from the SMF.

The second request #2 is used to obtain uplink N9 CN information #2.

Step 8: The second PSA UPF sends a second response #2 to the SMF. In other words, the SMF receives the second response #2 from the second PSA UPF.

The second response #2 includes the uplink N9 CN information #2.

Step 9: The SMF determines a second I-UPF.

Specifically, the SMF deduces, based on related information provided by the second RAN, how to determine a satellite-borne second intermediate user plane network element.

For example, the SMF determines the second intermediate user plane network element based on at least one of the RAT #2, TAI information #2 in the ULI #2, NGCI information #2 in the ULI #2, or satellite running and control information.

Step 10: The SMF sends a third request #2 to the second intermediate user plane network element. In other words, the second intermediate user plane network element receives the third request #2 from the SMF.

The third request #2 is used to request the second intermediate user plane network element to allocate uplink N3 CN information #2. Specifically, the third request #2 includes the uplink N9 CN information #2.

Step 11: The second intermediate user plane network element sends a third response #2 to the SMF. In other words, the SMF receives the third response #2 from the second intermediate user plane network element.

The third response #2 is used to respond to the third request #2. Specifically, the third response #2 includes the uplink N3 CN information #2.

Step 12: The SMF sends a first message #2 to the AMF. In other words, the AMF receives the first message #2 from the SMF.

The first message #2 includes the uplink N3 CN information #2, the IP address #2, a second PDU session establishment accept message, and other information.

For example, the second message #2 may be referred to as N1N2 message transfer (Namf_Communication_N1N2MessageTransfer).

Step 13: The AMF sends a fourth request #2 to the second RAN. In other words, the second RAN receives the fourth request #2 from the AMF.

The fourth request #2 is used to request to establish an N2 PDU session. Specifically, the fourth request #2 includes the uplink N3 CN information #2 and the IP address #2.

Step 14: The second RAN exchanges signaling with the second UE, to request the second UE to establish a session, where the signaling includes a session establishment accept message.

Step 15: The second RAN sends a fourth response #2 to the AMF. In other words, the AMF receives the fourth response #2 from the second RAN.

The fourth response #2 is used to respond to the fourth request #2. Specifically, the fourth response #2 includes downlink N3 AN information #2 allocated by the second RAN, and the like.

Step 16: The AMF sends a fifth request #2 to the SMF. In other words, the SMF receives the fifth request #2 from the AMF.

The fifth request #2 includes the downlink N3 AN information #2 and the like.

Optionally, the fifth request #2 may be a second PDU session SM context update (Nsmf_PDUSession_UpdateSMContext) request message.

Step 17: The SMF sends a sixth request #2 to the second intermediate user plane network element. In other words, the second intermediate user plane network element receives the sixth request #2 from the SMF.

The sixth request #2 includes the downlink N3 AN information #2.

Optionally, the sixth request #2 may be an N4 session modification request.

Step 18: The second intermediate user plane network element sends a sixth response #2 to the SMF. In other words, the SMF receives the sixth response #2 from the second intermediate user plane network element.

The sixth response #2 is used to respond to the sixth request #2. Specifically, the sixth response #2 includes downlink N9 CN information #2.

Step 19: The SMF sends a seventh request #2 to the second PSA UPF. In other words, the second PSA UPF receives the seventh request #2 from the SMF.

The seventh request #2 includes the downlink N9 CN information #2.

Optionally, the seventh request #2 may be an N4 session modification request.

In a possible implementation, for non-5G VN communication, the seventh request #2 further includes a second PDR and a second URR. The second PDR includes at least one of the following information:
information indicating whether second data is from a satellite access network device, information indicating whether an access network source interface uses satellite backhaul, information indicating whether a network instance uses satellite backhaul, the downlink N9 CN information #2, the uplink N9 CN information #2, or destination address information #2, where the destination address information #2 includes a destination IP address range #2 or set #2.

Specifically, when the UPF is used to allocate an address, the destination IP address range #2 corresponds to an address pool range managed by the second PSA UPF. When the SMF is used to allocate an address, the destination IP address range #2 corresponds to an address pool range allocated by the SMF.

A reporting trigger of the second URR includes that a destination IP address range #2 corresponding to the second PDR is successfully matched.

In another possible implementation, for 5G VN communication, a corresponding second PDR, a corresponding second FAR, and other rules are delivered based on an existing mechanism, and a second URR for reporting peer-to-peer communication is further delivered. A reporting trigger of the second URR includes that a destination IP or destination MAC corresponding to the second PDR is successfully matched.

Step 20: The second PSA UPF installs the second PDR and the second URR.

Step 21: The first PSA UPF sends a seventh response #2 to the SMF. In other words, the SMF receives the seventh response #2 from the first PSA UPF.

Step 22: The SMF sends a fifth response #2 to the AMF. In other words, the AMF receives the fifth response #2 from the SMF.

The fifth response #2 is used to respond to the fifth request #1.

Optionally, the fifth response #2 may be a second PDU session SM context update (Nsmf_PDUSession_UpdateSMContext) response message.

In a possible implementation, a procedure of establishing the PDU session by the second terminal device may occur after the first terminal device establishes the first PDU session.

In another possible implementation, a procedure of establishing the PDU session by the second terminal device may occur before the first terminal device establishes the first PDU session.

In still another possible implementation, a procedure of establishing the PDU session by the second terminal device and the procedure of establishing the first PDU session by the first terminal device may be simultaneously performed.

In addition, in a possible implementation, the second PDU session and the first PDU session are anchored at a same PSA UPF. In other words, the first PSA UPF and the second PSA UPF are a same PSA UPF.

When the second PDU session and the first PDU session are anchored at the same PSA UPF, in a possible implementation, for the second PDU session and the first PDU session, a same RAN and/or a same I-UPF are/is used. In other words, the first RAN and the second RAN are a same RAN, and/or the first intermediate user plane network element and the second intermediate user plane network element are a same I-UPF.

For example, the first terminal device and the second terminal device use a same satellite for access. Therefore, a same satellite-borne RAN and a same satellite-borne I-UPF are used.

In another possible implementation, for the second PDU session and the first PDU session, different RANs and different I-UPFs are used.

For example, the first terminal device and the second terminal device use different satellites for access, but the satellites belong to a same constellation. Therefore, PSA UPFs may be the same, but the RANs and the I-UPFs may be different.

In still another possible implementation, for the second PDU session and the first PDU session, different RANs and a same I-UPF are used.

For example, in a satellite backhaul scenario, different ground RANs use same satellite backhaul. Therefore, a same I-UPF is used.

In another possible implementation, the second PDU session and the first PDU session are anchored at different PSA UPFs. In other words, the first PSA UPF and the second PSA UPF are different PSA UPFs.

When the second PDU session and the first PDU session are anchored at different PSA UPFs, the second PDU session and the first PDU session use different RANs and I-UPFs. In other words, the first RAN is different from the second RAN, and/or the first intermediate user plane network element is different from the second intermediate user plane network element.

For example, the first UE and the second UE use different satellites for access or backhaul, and different PSA UPFs may be anchored due to a long distance between locations of the first UE and the second UE.

Further, in this implementation, for non-5G VN communication, when the second PSA UPF allocates the IP address #2, the SMF determines, based on information about the first PDU session, that the first PDU session established by the first UE in peer-to-peer communication is anchored at the first PSA UPF. Therefore, when the SMF configures the second PDR for the second PSA UPF, the destination IP address range #2 included in the second PDR includes an IP address range corresponding to the address pool managed by the second PSA UPF and an IP address range corresponding to the address pool managed by the first PSA UPF, and the SMF updates the first PDR of the first PSA UPF, and increases the IP address range corresponding to the address pool managed by the second PSA UPF.

For 5G VN group communication, the SMF establishes a 5G VN group granularity N4 session with the second PSA UPF, creates N19, delivers corresponding rules: the second PDR and the second FAR, enables N19 forwarding, and further delivers the second URR for reporting peer-to-peer communication. The reporting trigger of the URR includes that a destination IP/MAC of the second PDR that is for corresponding N19 forwarding is successfully matched. In addition, the SMF establishes a 5G VN group granularity N4 session with the first PSA UPF, creates an N19 tunnel, delivers corresponding rules: the first PDR and the first FAR, enables N19 forwarding, and further delivers the first URR for reporting peer-to-peer communication. The reporting trigger of the first URR includes that a destination IP/MAC of the first PDR that is for corresponding N19 forwarding is successfully matched.

The foregoing describes related configurations in the PDU session establishment process. When there is a communication requirement between the first UE and the second UE, for example, for non-5G VN communication, when the first PSA UPF receives uplink data sent by the first UE to the second UE, a destination address is in the address range of the second PDR, and the matching succeeds. In this case, the data packet is forwarded by the second FAR to a DN, a routing and forwarding device of the DN returns the data packet to the first PSA UPF or the second PSA UPF of the target second UE, and the first PSA UPF or the second PSA UPF sends the data packet to the target second UE.

For another example, for 5G VN communication, when the first UE and the second UE use a same PSA UPF, the first PSA UPF performs local forwarding to implement data transmission. A specific transmission manner is described in detail when the local forwarding is described above (for example, the transmission procedure shown in FIG. 3). Details are not described herein again.

For still another example, for 5G VN communication, when the first UE and the second UE use different PSA UPFs, the first PSA UPF and the second PSA UPF implement data transmission based on N19 forwarding (for example, the transmission procedure shown in FIG. 2).

In other words, when there is a communication requirement between the first UE and the second UE, the first PSA UPF forwards a 1^{st} received data packet to the target UE based on an existing 5G VN communication mechanism. For a subsequent to-be-transmitted data packet between the first UE and the second UE, data transmission may be implemented by activating the inserted first intermediate user plane network element and second intermediate user plane network element, to reduce a data transmission latency. The method procedure shown in FIG. 8 further includes the following steps.

S824: The first PSA UPF sends first information to the SMF.

Because there is a communication requirement between the first UE and the second UE, the first PSA UPF reports a peer-to-peer communication report (for example, the first information). For details, refer to the descriptions of step S710. Details are not described herein again.

S825: The SMF determines a communication mode.

That the SMF determines, based on the received first information and session information, whether to perform satellite peer-to-peer communication is specifically as follows.

The SMF determines a session of a target UE based on a destination address (for example, a destination IP address or a destination MAC address) of data included in the first information, determines whether the peer-to-peer communication is enabled for the session (for example, the second PDU session) of the target UE, and determines, with reference to at least one of source interface identifier information, network instance information, and N9 tunnel information included in the first information, whether a same I-UPF or different I-UPFs are currently used for the first PDU session and the second PDU session.

In a possible implementation, if the first intermediate user plane network element is not inserted in S809, the SMF may insert the first intermediate user plane network element for the first PDU session of the first UE in this step (to be specific, when it is determined that satellite-based peer-to-peer communication needs to be performed). Similarly, the SMF inserts the second I-UPF for the second PDU session of the second UE.

S826: The SMF sends a PDR and a FAR to the first intermediate user plane network element.

For example, the SMF sends an N4 session modification request to the first intermediate user plane network element, where the N4 session modification request includes the PDR and the FAR.

In a possible implementation, for the session of the first UE and the session of the second UE, the same I-UPF is used.

In this implementation, an internal forwarding interface is created on the first intermediate user plane network element, and the corresponding PDR and FAR are delivered, so that data of the first UE and data of the second UE are locally forwarded based on the first intermediate user plane network element.

In another possible implementation, for the session of the first UE and the session of the second UE, the different I-UPFs are used.

In this implementation, the SMF establishes an Nx tunnel (for example, N19) between the first intermediate user plane network element and the second intermediate user plane network element, so that data is transmitted between the first intermediate user plane network element and the second intermediate user plane network element through the tunnel. The establishing an Nx tunnel specifically includes: creating an Nx#1 interface on the first intermediate user plane network element, to obtain downlink Nx#1 tunnel information; and creating an Nx#2 interface on the second intermediate user plane network element, to obtain uplink Nx#2 tunnel information.

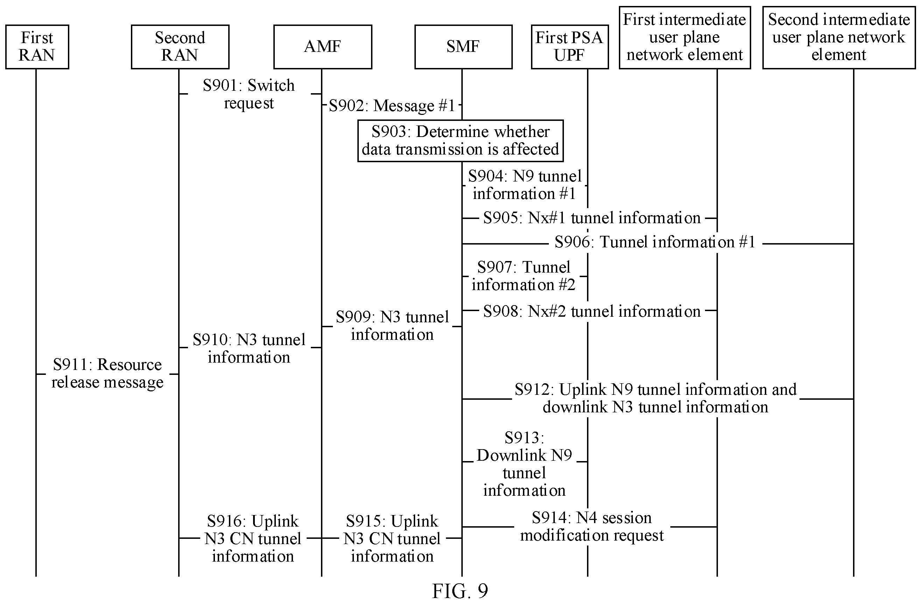

With reference to FIG. 8, the foregoing describes in detail an embodiment of how to implement peer-to-peer communication provided in this application. Further, this application further provides a communication method, so that in a scenario in which switching is performed on an access network device of a UE, an SMF can redetermine, for an affected session, a network element that provides a forwarding service. For ease of understanding, the following describes the communication method in detail with reference to FIG. 9.

It is assumed that before the switching, both a first UE and a second UE access a core network via a first RAN and a first intermediate user plane network element, and there is a session for which peer-to-peer communication is enabled. In a handover phase of an accessed access network device, the second UE is handed over from the first RAN to a second RAN.

FIG. 9 is a schematic flowchart of still another communication method according to an embodiment of this application. The method includes the following steps.

S901: A second RAN sends a switch request to an AMF.

The switch request includes a list of sessions to be switched and downlink N3 tunnel information allocated by the second RAN.

Optionally, the switch request may be an N2 path switch request (N2 PATH Switch Request).

S902: The AMF sends a message #1 to an SMF.

The message #1 includes the downlink N3 tunnel information and the list of sessions to be switched. Optionally, the message #1 may be a PDU session context update request (Nsmf_PDUSession_UpdateSMContext Request).

S903: The SMF determines whether data transmission is affected.

Specifically, the SMF determines, based on the list of sessions to be switched and a peer-to-peer communication context maintained by the SMF, whether switching is needed for a session in the context.

For example, a session in which peer-to-peer communication is implemented based on a first intermediate user plane network element includes a first PDU session, and the list of sessions to be switched includes the first PDU session.

When the SMF determines that data transmission of a session in which peer-to-peer communication exists may be affected, the method procedure shown in FIG. 9 further includes the following step.

S904: The SMF obtains uplink N9 tunnel information #1 from a first PSA UPF.

The uplink N9 tunnel information #1 is sent by the SMF to a second intermediate user plane network element in a subsequent step, to establish an N9 tunnel between the first PSA UPF and the second intermediate user plane network element.

For example, the SMF sends an N4 session modification request to the first PSA UPF, to request the first PSA UPF to allocate the uplink N9 tunnel information #1.

In a possible implementation, in a subsequent step, an Nx interface and forwarding may be created on the second intermediate user plane network element, to implement peer-to-peer communication migration (for example, a related configuration for forwarding data of the first PDU session is migrated from the first intermediate user plane network element to the second intermediate user plane network element). In this manner, the method procedure shown in FIG. 9 further includes the following steps.

S905: The SMF obtains Nx#1 tunnel information from the first intermediate user plane network element.

The Nx#1 tunnel information is sent by the SMF to the second intermediate user plane network element in a subsequent step, to establish an Nx tunnel between the first intermediate user plane network element and the second intermediate user plane network element.

For example, the SMF sends an N4 session modification request #1 to the first intermediate user plane network element, to request the first intermediate user plane network element to allocate the Nx#1 (for example, N19) tunnel information. The first intermediate user plane network element returns a response, where the response carries the Nx#1 tunnel information.

Specifically, the SMF may determine, based on the N3 tunnel information carried in the switch request in step S901, the second intermediate user plane network element as a switch target. For example, the second intermediate user plane network element and the second RAN are deployed on a same satellite, or a satellite on which the second intermediate user plane network element is located provides a backhaul link for the second RAN.

S906: The SMF obtains tunnel information #1 from the second intermediate user plane network element.

For example, the SMF sends an N4 session modification request #2 to the second intermediate user plane network element, to request the second intermediate user plane network element to allocate the tunnel information #1. The tunnel information #1 includes Nx#2 tunnel information. The Nx#2 tunnel information is sent by the SMF to the first intermediate user plane network element in a subsequent step, to establish the Nx tunnel between the first intermediate user plane network element and the second intermediate user plane network element. The tunnel information #1 further includes N3 tunnel information. The N3 tunnel information is sent by the SMF to the second RAN in a subsequent step, to establish an N3 tunnel between the second RAN and the second intermediate user plane network element. The tunnel information #1 further includes N9 tunnel information #2. The N9 tunnel information #2 is sent by the SMF to the first PSA UPF, to establish the N9 tunnel between the first PSA UPF and the second intermediate user plane network element. The second intermediate user plane network element returns a response, where the response carries the tunnel information #1.

Specifically, the SMF configures a PDR and a FAR for the second intermediate user plane network element to implement Nx (for example, N19)-based data forwarding. For uplink data (for example, a data packet from a first UE to a second UE), the PDR includes that a destination address is an IP address of the second UE, and the FAR includes address information of the first intermediate user plane network element in the Nx#1 tunnel information. For downlink data (for example, a data packet from the second UE to the first UE), the PDR includes that a destination address is an IP address of the first UE, and the FAR is set to include RAN address information in the N3 tunnel information obtained in step S901.

S907: The SMF sends the tunnel information #2 to the first PSA UPF.

The tunnel information #2 is used to establish an N9 tunnel between the first PSA UPF and the second intermediate user plane network element.

For example, the SMF sends an N4 session modification request to the first PSA UPF. The N4 session modification request carries the downlink N9 tunnel information of the second intermediate user plane network element obtained in step S906 and an N9 tunnel of an anchor PSA UPF (used to send, to the anchor PSA UPF and then through N6, a data packet that is not locally forwarded).

S908: The SMF sends the Nx#2 tunnel information to the first intermediate user plane network element.

For example, the SMF sends an N4 session modification request to the first intermediate user plane network element, where the N4 session modification request carries the Nx#2 tunnel information obtained in step S906, and is used by the first intermediate user plane network element to establish the Nx tunnel between the first intermediate user plane network element and the second intermediate user plane network element.

Specifically, the SMF configures a PDR and a FAR for the first intermediate user plane network element. For uplink data (for example, a data packet from a first UE to a second UE), the PDR includes that a destination address is an IP address of the second UE, and the FAR includes I-UPF address information in the Nx#1 tunnel information. For downlink data (for example, a data packet from the second UE to the first UE), the PDR includes that a destination address is an IP address of the first UE, and the FAR is set to include RAN address information in the N3 tunnel information obtained in step S901.

S909: The SMF sends the N3 tunnel information to the AMF.

S910: The AMF sends the N3 tunnel information to the second RAN 2.

S911: The second RAN sends a resource release message to the first RAN.

In another possible implementation, a rule on the first intermediate user plane network element is first modified, a data packet is directed to the first PSA UPF through N9, matching is performed on the first PSA UPF again, and peer-to-peer communication is enabled on the second intermediate user plane network element. In comparison with the foregoing implementation, in this implementation, a procedure of performing ground detection and reporting and then enabling on-satellite forwarding can be reused, and continuity of data transmission is ensured, so that operation complexity of the SMF is reduced (where a data packet may be first forwarded by the first PSA UPF, and then forwarded by the second intermediate user plane network element after configuration is completed). In this manner, the method procedure shown in FIG. 9 further includes the following steps.

Specifically, the SMF determines, based on the N3 tunnel information carried in the switch request in step S901, the second intermediate user plane network element as a switch target. For example, the second intermediate user plane network element and the second RAN are deployed on a same satellite, or a satellite on which the second intermediate user plane network element is located provides a backhaul link for the second RAN.

S912: The SMF sends uplink N9 tunnel information and downlink N3 tunnel information to the second intermediate user plane network element.

The SMF sends an N4 session modification request to the second intermediate user plane network element, where the N4 session modification request carries the uplink N9 tunnel information and the downlink N3 AN tunnel information. The SMF requests to allocate downlink N3 and N9 tunnel information. The second intermediate user plane network element returns the downlink N3 and N9 tunnel information.

S913: The SMF sends an N4 session modification request to the first PSA UPF, where the N4 session modification request carries the downlink N9 tunnel information that is allocated by the second intermediate user plane network element and that is obtained in step S912; and the first PSA UPF returns a response.

S914: The SMF sends an N4 session modification request to the first intermediate user plane network element, to modify the PDR and the FAR, so that a data packet from an N3 interface is forwarded to the first PSA UPF, and the first PSA UPF forwards the data packet.

S915: The SMF sends a message #2 (for example, Nsmf_PDUSession_UpdateSMContext Response) to the AMF, where the message carries uplink N3 CN tunnel information obtained in step S912.

S916: The AMF sends the uplink N3 CN tunnel information to the second RAN.

S917: The second RAN sends the resource release message to the first RAN.

When the first UE and the second UE communicate again, a data packet is generated, and peer-to-peer communication re-matching succeeds, the SMF creates Nx-based forwarding as shown in steps S824 to S826 in FIG. 8, for example, establishes the Nx tunnel between the first intermediate user plane network element and the second intermediate user plane network element, to forward data. A specific procedure is not described herein again.

It should be understood that sequence numbers of the foregoing processes do not mean execution sequences. The execution sequences of the processes should be determined based on functions and internal logic of the processes, and should not be construed as any limitation on implementation processes of embodiments of this application.

It should be further understood that, in embodiments of this application, unless otherwise specified or there is a logic conflict, terms and/or descriptions in different embodiments are consistent and may be mutually referenced, and technical features in different embodiments may be combined based on an internal logical relationship thereof, to form a new embodiment.

For example, the embodiment shown in FIG. 8 and the embodiment shown in FIG. 9 may be combined, so that peer-to-peer communication may be established, and switching may be performed on a network element that provides a forwarding service when there is a switching requirement. For example, when switching is performed from a first access network device accessed by a first terminal device to a second access network device, a session management network element determines, based on a set of to-be-switched sessions, whether the set of sessions includes a first session. When the set of sessions includes the first session, the session management network element determines, based on first information, a third network element to forward data of the first session.

It should be further understood that in some of the foregoing embodiments, a device in a conventional network architecture is mainly used as an example for description (for example, a network device and a terminal device). It should be understood that a specific form of the device is not limited in embodiments of this application. For example, all devices that can implement a same function in the future are applicable to embodiments of this application.

It may be understood that, in the foregoing method embodiments, methods and operations implemented by a device (for example, the foregoing network device or terminal device) may also be implemented by a component (for example, a chip or a circuit) of the device.

The communication methods provided in embodiments of this application are described above in detail with reference to FIG. 7 to FIG. 9. The foregoing communication methods are mainly described from a perspective of interaction between network elements. It may be understood that, to implement the foregoing functions, each network element includes corresponding hardware structures and/or software modules for performing the functions.

A person skilled in the art should be able to be aware that, in combination with the examples described in embodiments disclosed in this specification, units and algorithm steps can be implemented by hardware or a combination of hardware and computer software in this application. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

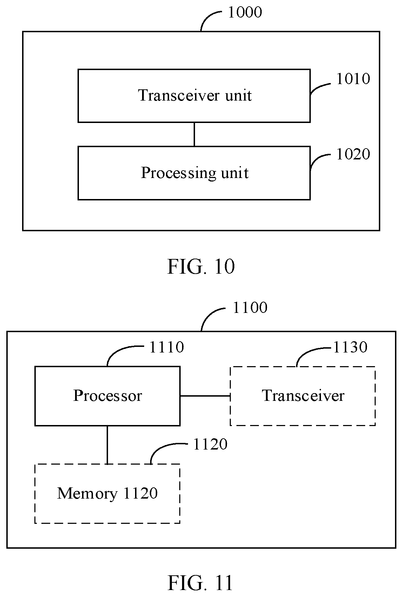

A communication apparatus provided in embodiments of this application is described below in detail with reference to FIG. 10 and FIG. 11. It should be understood that descriptions of apparatus embodiments correspond to the descriptions of the method embodiments. Therefore, for content that is not described in detail, refer to the foregoing method embodiments. For brevity, some content is not described again.

In embodiments of this application, division into functional modules of a transmitter device or a receiver device may be performed based on the foregoing method examples. For example, functional modules may be obtained through division based on corresponding functions, or two or more functions may be integrated into one processing module. The integrated module may be implemented in a form of hardware, or may be implemented in a form of a software functional module. It should be noted that, in embodiments of this application, module division is an example, which is merely logical function division. During actual implementation, another division manner may be used. An example in which division into functional modules is performed based on corresponding functions is used below for description.

FIG. 10 is a schematic block diagram of an apparatus 1000 according to an embodiment of this application. The apparatus 1000 includes a transceiver unit 1010 and a processing unit 1020. The transceiver unit 1010 may implement a corresponding communication function, and the processing unit 1020 is configured to perform data processing. The transceiver unit 1010 may also be referred to as a communication interface or a communication unit. When implementing an information obtaining function, the transceiver unit 1010 may also be referred to as an obtaining unit.

Optionally, the apparatus 1000 may further include a storage unit. The storage unit may be configured to store instructions and/or data. The processing unit 1020 may read the instructions and/or the data in the storage unit, so that the apparatus implements the foregoing method embodiments.

The apparatus 1000 may be configured to perform an action performed by a device (such as the foregoing core network element, access network device, or terminal device) in the foregoing method embodiments. In this case, the apparatus 1000 may be the device or a component that can be configured in the device. The transceiver unit 1010 is configured to perform receiving and sending related operations of the device in the foregoing method embodiments. The processing unit 1020 is configured to perform processing related operations of the device in the foregoing method embodiments.

In a design, the apparatus 1000 is configured to perform an action performed by the session management network element in the foregoing method embodiments.

The transceiver unit 1010 is configured to receive first information from a first anchor user plane network element. The first anchor user plane network element is a user plane network element anchored by a first session established by a first terminal device, the first information includes a source address of first data and/or a destination address of the first data, and the first data includes data that is of the first session and that is to be sent by the first terminal device to a second terminal device and/or data that is to be sent by the second terminal device to the first terminal device.

The processing unit 1020 is configured to determine, based on the first information, whether the first terminal device and the second terminal device use a same access network or a same backhaul network.

When the first terminal device and the second terminal device use the same access network or the same backhaul network, the processing unit 1020 is further configured to determine a first network element configured to forward the data of the first session.

The apparatus 1000 may implement corresponding steps or procedures performed by the session management network element in the method embodiments according to embodiments of this application. The apparatus 1000 may include units configured to perform the methods performed by the session management network element in the method embodiments. In addition, the units in the apparatus 1000 and the foregoing other operations and/or functions are separately used to implement corresponding procedures in the method embodiments of the session management network element in the method embodiments.

When the apparatus 1000 is configured to perform the method in FIG. 7, the transceiver unit 1010 may be configured to perform receiving and sending steps in the method, such as steps S710, S720, and S770; and the processing unit 1020 may be configured to perform processing steps in the method, such as steps S740, S750, and S760.

When the apparatus 1000 is configured to perform the method in FIG. 8, the transceiver unit 1010 may be configured to perform receiving and sending steps in the method, such as steps S803, S804, S805, S807, S808, S810, S811, S812, S816, S817, S818, S819, S821, S822, S824 and S826; and the processing unit 1020 may be configured to perform processing steps in the method, such as steps S806, S809, and S825.

When the apparatus 1000 is configured to perform the method in FIG. 9, the transceiver unit 1010 may be configured to perform receiving and sending steps in the method, such as steps S902, S904, S906, S905, S907, S908, S909, S912, S913, S914 and S915; and the processing unit 1020 may be configured to perform processing steps in the method, such as step S903.

It should be understood that a specific process in which the units perform the foregoing corresponding steps is described in detail in the foregoing method embodiments. For brevity, details are not described herein.

In another design, the apparatus 1000 is configured to perform an action performed by the first anchor user plane network element in the foregoing method embodiments.

The apparatus 1000 may implement corresponding steps or procedures performed by the first anchor user plane network element in the method embodiments according to embodiments of this application. The apparatus 1000 may include units configured to perform the methods performed by the first anchor user plane network element in the method embodiments. In addition, the units in the apparatus 1000 and the foregoing other operations and/or functions are separately used to implement corresponding procedures in the method embodiments of the first anchor user plane network element in the method embodiments.

The processing unit 1020 is configured to determine first information. A first anchor user plane network element is an anchor user plane network element anchored by a first session established by a first terminal device.

The transceiver unit 1010 is configured to send the first information to a session management network element. The first information includes a source address of first data and/or a destination address of the first data. The first data includes data that is of the first session and that is to be sent by the first terminal device to a second terminal device and/or data that is to be sent by the second terminal device to the first terminal device. The first information is used to determine whether the first terminal device and the second terminal device use a same access network or a same backhaul network.

When the apparatus 1000 is configured to perform the method in FIG. 7, the transceiver unit 1010 may be configured to perform receiving and sending steps in the method, such as steps S710 and S720; and the processing unit 1020 may be configured to perform a processing step in the method, such as step S730.

When the apparatus 1000 is configured to perform the method in FIG. 8, the transceiver unit 1010 may be configured to perform receiving and sending steps in the method, such as steps S807, S808, S819, S821, and S824; and the processing unit 1020 may be configured to perform a processing step in the method, such as step S820.

When the apparatus 1000 is configured to perform the method in FIG. 9, the transceiver unit 1010 may be configured to perform receiving and sending steps in the method, such as steps S904, S907, and S913; and the processing unit 1020 may be configured to perform processing steps in the method.

It should be understood that a specific process in which the units perform the foregoing corresponding steps is described in detail in the foregoing method embodiments. For brevity, details are not described herein.

In still another design, the apparatus 1000 is configured to perform an action performed by the first network element in the foregoing method embodiments.

The apparatus 1000 may implement corresponding steps or procedures performed by the first network element in the method embodiments according to embodiments of this application. The apparatus 1000 may include units configured to perform the methods performed by the first network element in the method embodiments. In addition, the units in the apparatus 1000 and the foregoing other operations and/or functions are separately used to implement corresponding procedures in the method embodiments of the first network element in the method embodiments.

The transceiver unit 1010 is configured to receive a packet detection rule PDR and a packet forwarding rule FAR from a session management network element.

The processing unit 1020 is configured to forward data of a first session according to the PDR and the FAR. A first network element is a network element that forwards the data of the first session established by a first terminal device.

When the apparatus 1000 is configured to perform the method in FIG. 7, the transceiver unit 1010 may be configured to perform receiving and sending steps in the method, such as step S770; and the processing unit 1020 may be configured to perform processing steps in the method.

When the apparatus 1000 is configured to perform the method in FIG. 8, the transceiver unit 1010 may be configured to perform receiving and sending steps in the method, such as steps S810, S811, S817, S818, and S826; and the processing unit 1020 may be configured to perform processing steps in the method.

When the apparatus 1000 is configured to perform the method in FIG. 9, the transceiver unit 1010 may be configured to perform receiving and sending steps in the method, such as steps S905, S908, and S914; and the processing unit 1020 may be configured to perform processing steps in the method.

It should be understood that a specific process in which the units perform the foregoing corresponding steps is described in detail in the foregoing method embodiments. For brevity, details are not described herein.

The processing unit 1020 in the foregoing embodiment may be implemented by at least one processor or processor-related circuit. The transceiver unit 1010 may be implemented by a transceiver or a transceiver-related circuit. The storage unit may be implemented by at least one memory.

As shown in FIG. 11, an embodiment of this application further provides an apparatus 1100. The apparatus 1100 includes a processor 1110, and may further include one or more memories 1120. The processor 1110 is coupled to the memory 1120. The memory 1120 is configured to store a computer program or instructions and/or data. The processor 1110 is configured to execute the computer program or the instructions and/or the data stored in the memory 1120, so that the method in the foregoing method embodiments is performed. Optionally, the apparatus 1100 includes one or more processors 1110.

Optionally, the memory 1120 and the processor 1110 may be integrated together, or separately disposed.

Optionally, as shown in FIG. 11, the apparatus 1100 may further include a transceiver 1130. The transceiver 1130 is configured to receive and/or send signals. For example, the processor 1110 is configured to control the transceiver 1130 to receive and/or send a signal.

In a solution, the apparatus 1100 is configured to implement operations performed by a device (such as the foregoing core network element, access network device, and terminal device) in the foregoing method embodiments.

An embodiment of this application further provides a computer-readable storage medium. The computer-readable storage medium stores computer instructions used to implement the method performed by the device (such as the foregoing core network element, access network device, and terminal device) in the foregoing method embodiments.

For example, when a computer program is executed by a computer, the computer is enabled to implement the method performed by a network device in the foregoing method embodiments.

An embodiment of this application further provides a computer program product including instructions. When the instructions are executed by a computer, the computer is enabled to implement the method performed by a device (such as the foregoing core network element, access network device, and terminal device) in the foregoing method embodiments.

An embodiment of this application further provides a communication system. The communication system includes a device (such as the foregoing core network element, access network device, and terminal device) in the foregoing embodiments.

For explanations and beneficial effects of related in any apparatuses provided above, refer to the corresponding method embodiments provided above. Details are not described herein again.

It should be understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM can be used as an external cache. By way of example rather than limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) may be integrated into the processor.

It should be noted that the memory described in this specification is intended to include but is not limited to these memories and any memory of another proper type.

A person of ordinary skill in the art may be aware that, in combination with the examples described in embodiments disclosed in this specification, units and steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the protection scope of this application.

In the several embodiments provided in this application, it should be understood that the disclosed apparatus and method may be implemented in other manners. For example, the described apparatus embodiments are merely examples. For example, division into the units is merely logical function division. During actual implementation, another division manner may be used. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one place, or may be distributed on a plurality of network units. Some or all of the units may be selected based on actual requirements to implement the solutions provided in this application.

In addition, functional units in embodiments of this application may be integrated into one unit, each of the units may exist alone physically, or two or more units may be integrated into one unit.

All or some of the foregoing embodiments may be implemented by using software, hardware, firmware, or any combination thereof. When software is used to implement the foregoing embodiments, all or some of the foregoing embodiments may be implemented in a form of a computer program product. The computer program product includes one or more computer instructions. When the computer program instructions are loaded and executed on the computer, the procedures or functions according to embodiments of this application are all or partially generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the usable medium may include but is not limited to any medium that can store program code, such as a USB flash drive, a removable hard disk, a read-only memory (read-only memory, ROM), a random access memory (random access memory, RAM), a magnetic disk, or an optical disc.

Further embodiments of the present invention are provided in the following. It should be noted that the numbering used in the following section does not necessarily need to comply with the numbering used in the previous sections.

Embodiment 1. A communication method, comprising:
receiving, by a session management network element, first information from a first anchor user plane network element, wherein the first anchor user plane network element is a user plane network element anchored by a first session established by a first terminal device, the first information comprises a source address of first data and/or a destination address of the first data, and the first data comprises data that is of the first session and that is to be sent by the first terminal device to a second terminal device and/or data that is to be sent by the second terminal device to the first terminal device;
determining, by the session management network element based on the first information, whether the first terminal device and the second terminal device use a same access network or a same backhaul network; and
determining, by the session management network element when the first terminal device and the second terminal device use the same access network or the same backhaul network, a first network element configured to forward the data of the first session.

Embodiment 2. The method according to embodiment 1, wherein the first information comprises an address of the second terminal device, and the determining, by the session management network element based on the first information, whether the first terminal device and the second terminal device use a same access network or a same backhaul network comprises:
determining, by the session management network element, location information of the second terminal device based on the address of the second terminal device; and
determining, by the session management network element based on location information of the first terminal device and the location information of the second terminal device, whether the first terminal device and the second terminal device use the same access network or the same backhaul network.

Embodiment 3. The method according to embodiment 1, wherein the first information comprises an address of the second terminal device, and the determining, by the session management network element based on the first information, whether the first terminal device and the second terminal device use a same access network or a same backhaul network comprises:
determining, by the session management network element based on the address of the second terminal device, a second data network access identifier corresponding to a session of the second terminal device; and
determining, by the session management network element based on a first data network access identifier corresponding to the first session and the second data network access identifier, whether the first terminal device and the second terminal device use the same access network or the same backhaul network.

Embodiment 4. The method according to any one of embodiments 1 to 3, wherein the first network element comprises a second anchor user plane network element or an intermediate user plane network element, wherein
the second anchor user plane network element is a user plane network element other than the first anchor user plane network element anchored by the first session, and the intermediate user plane network element is configured to provide a forwarding service for communication performed between the first terminal device and the second terminal device via the first session.

Embodiment 5. The method according to embodiment 4, wherein if the first network element is the intermediate user plane network element, the determining, when the first terminal device and the second terminal device use the same access network or the same backhaul network, a first network element configured to forward the data of the first session comprises:
when the first terminal device and the second terminal device use the same access network or the same backhaul network, determining, by the session management network element, to insert the first network element or use the inserted first network element.

Embodiment 6. The method according to embodiment 4, wherein if the first network element is the second anchor user plane network element, the method further comprises:
migrating, by the session management network element, the first session from being anchored at the first anchor user plane network element to being anchored at the second anchor user plane network element.

Embodiment 7. The method according to any one of embodiments 1 to 6, wherein the first network element is located on a satellite.

Embodiment 8. The method according to any one of embodiments 1 to 7, wherein the access network comprises a satellite or a satellite constellation on which an access network device is located; and the backhaul network comprises a satellite over a backhaul link, the backhaul link, and a satellite constellation.

Embodiment 9. The method according to any one of embodiments 1 to 8, wherein the method further comprises:
sending, by the session management network element, first indication information to the first anchor user plane network element, wherein the first indication information indicates the first anchor user plane network element to report the first information when a first condition is met, wherein
the first condition comprises receiving data sent by the first terminal device to another terminal device and/or receiving data sent by the another terminal device to the first terminal device.

Embodiment 10. The method according to embodiment 9, wherein before the sending, by the session management network element, first indication information to the first anchor user plane network element, the method further comprises:
determining, by the session management network element based on second information, to send the first indication information to the first anchor user plane network element, wherein
the second information comprises at least one of the following:
   information about an access type RAT corresponding to the first session, type information of a backhaul link corresponding to the first session, or the location information of the first terminal device.

Embodiment 11. The method according to any one of embodiments 1 to 10, wherein before the receiving, by a session management network element, first information from a first anchor user plane network element, the method further comprises:
inserting, by the session management network element, the first network element based on third information, wherein
the third information comprises at least one of the following information:
   the first information, satellite running and control information, the information about the access type RAT corresponding to the first session, the location information of the first terminal device, or the location information of the second terminal device.

Embodiment 12. The method according to any one of embodiments 1 to 11, wherein the method further comprises:
sending, by the session management network element, a packet detection rule PDR and a packet forwarding rule FAR to the first network element, wherein the PDR and the FAR indicate the first network element to forward the data of the first session.

Embodiment 13. The method according to any one of embodiments 1 to 12, wherein the method further comprises:
establishing, by the session management network element, a first forwarding tunnel between the first network element and a second network element, wherein the first forwarding tunnel is used for transmission of data between the first network element and the second network element, wherein
the second network element is a network element that forwards data of a second session established by the second terminal device.

Embodiment 14. The method according to any one of embodiments 1 to 13, wherein the method further comprises:
establishing, by the session management network element, a second forwarding tunnel between the first anchor user plane network element and the first network element, wherein the second forwarding tunnel is used for transmission of data between the first anchor user plane network element and the first network element.

Embodiment 15. The method according to any one of embodiments 1 to 14, wherein when a first access network device accessed by the first terminal device switches to a second access network device, the method further comprises:
determining, by the session management network element based on a set of to-be-switched sessions, whether the set of sessions comprises the first session; and
when the set of sessions comprises the first session, determining, by the session management network element based on the first information, a third network element to forward the data of the first session.

Embodiment 16. The method according to any one of embodiments 1 to 15, wherein the first information further comprises at least one of the following information:
a source interface identifier of the first data, identification information of a local area network group to which the first terminal device belongs, network instance information used by the first anchor user plane network element to receive the first data, network instance information used by the first anchor user plane network element to send the first data, N3 or N9 tunnel information used by the first anchor user plane network element to receive the first data, or N3 or N9 tunnel information used by the first anchor user plane network element to send the first data.

Embodiment 17. A communication method, comprising:
determining, by a first anchor user plane network element, first information, wherein the first anchor user plane network element is an anchor user plane network element anchored by a first session established by a first terminal device; and
sending, by the first anchor user plane network element, the first information to a session management network element, wherein
the first information comprises a source address of first data and/or a destination address of the first data, the first data comprises data that is of the first session and that is to be sent by the first terminal device to a second terminal device and/or data that is to be sent by the second terminal device to the first terminal device, and the first information is used to determine whether the first terminal device and the second terminal device use a same access network or a same backhaul network.

Embodiment 18. The method according to embodiment 17, wherein the method further comprises:
receiving, by the first anchor user plane network element, first indication information from the session management network element, wherein the first indication information indicates the first anchor user plane network element to report the first information when a first condition is met; and
determining, by the first anchor user plane network element, whether the first condition is met, and sending, by the first anchor user plane network element, the first information to the session management network element when the first condition is met, wherein
the first condition comprises receiving data sent by the first terminal device to another terminal device and/or receiving data sent by the another terminal device to the first terminal device.

Embodiment 19. The method according to embodiment 17 or 18, wherein the first information further comprises at least one of the following information:
a source interface identifier of the first data, identification information of a local area network group to which the first terminal device belongs, network instance information used by the first anchor user plane network element to receive the first data, network instance information used by the first anchor user plane network element to send the first data, N3 or N9 tunnel information used by the first anchor user plane network element to receive the first data, or N3 or N9 tunnel information used by the first anchor user plane network element to send the first data.

Embodiment 20. A communication apparatus, configured to perform the method according to any one of embodiments 1 to 16.

Embodiment 21. A communication apparatus, configured to perform the method according to any one of embodiments 17 to 19.

Embodiment 22. A computer-readable storage medium, wherein the computer-readable storage medium stores a computer program; and when the computer program is run, an apparatus is enabled to perform the method according to any one of embodiments 1 to 19.

Embodiment 23. A chip system, comprising a processor, configured to invoke a computer program from a memory and run the computer program, to enable a communication apparatus in which the chip system is installed to perform the method according to any one of embodiments 1 to 19.

Embodiment 24. A communication system, wherein the communication system comprises at least one communication apparatus according to embodiment 20 and at least one communication apparatus according to embodiment 21.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
determining, by a first anchor user plane network element, first information, wherein the first anchor user plane network element is an anchor user plane network element anchored by a first session established by a first terminal device, and the first anchor user plane network element is a ground anchor user plane network element; and
sending, by the first anchor user plane network element, the first information to a session management network element, wherein
the first information comprises a destination address of the first data, the first data comprises data that is of the first session and that is to be sent by the first terminal device to a second terminal device, and the first information is used to determine whether the first terminal device and the second terminal device use a same satellite backhaul network.

2. The method according to claim 1, wherein that the first terminal device and the second terminal device use the same satellite backhaul network comprises: the first terminal device and the second terminal device use a same geostationary equatorial orbit, GEO, satellite

3. The method according to claim 2, wherein the method further comprises:
receiving, by the first anchor user plane network element, first indication information from the session management network element, wherein the first indication information indicates the first anchor user plane network element to report the first information when a first condition is met; and
determining, by the first anchor user plane network element, whether the first condition is met, and sending, by the first anchor user plane network element, the first information to the session management network element when the first condition is met, wherein
the first condition comprises receiving data sent by the first terminal device to another terminal device and/or receiving data sent by the another terminal device to the first terminal device.

4. The method according to any one of claims 1 to 3, wherein the first information further comprises at least one of the following information:
a source interface identifier of the first data, identification information of a local area network group to which the first terminal device belongs, network instance information used by the first anchor user plane network element to receive the first data, network instance information used by the first anchor user plane network element to send the first data, N3 or N9 tunnel information used by the first anchor user plane network element to receive the first data, or N3 or N9 tunnel information used by the first anchor user plane network element to send the first data.

5. The method according to any one of claims 1-4, wherein the destination address of the first data comprises an Internet Protocol, IP, address of the second terminal device.

6. The method according to any one of claims 1-5, wherein the first terminal device and the second terminal device are in one 5th generation virtual network, 5G VN, group.

7. A communication apparatus, configured to perform the method according to any one of claims 1 to 6.

8. A computer-readable storage medium, wherein the computer-readable storage medium stores computer instructions used to implement the method according to any one of claims 1 to 6.

9. A computer program product, wherein the computer program product includes instruction, wherein when the instructions are executed by a computer, the computer is enabled to implement the method according to any one of claims 1 to 6.
